(19) Europäisches Patentamt
European Patent Office
Office européen des brevets

(11) **EP 4 494 862 A1**

(12) **EUROPEAN PATENT APPLICATION**
published in accordance with Art. 153(4) EPC

(43) Date of publication:
**22.01.2025 Bulletin 2025/04**

(21) Application number: 23770350.9

(22) Date of filing: **27.02.2023**

(51) International Patent Classification (IPC):
**B32B 5/28** (2006.01)    **B32B 27/00** (2006.01)
**B32B 27/20** (2006.01)    **C09K 21/10** (2006.01)
**D04H 1/4326** (2012.01)

(52) Cooperative Patent Classification (CPC):
**B32B 5/28; B32B 27/00; B32B 27/20; C09K 21/10; D04H 1/4326**

(86) International application number:
**PCT/JP2023/006970**

(87) International publication number:
**WO 2023/176391 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.03.2022 JP 2022042537**

(71) Applicant: **Toray Industries, Inc.**
**Tokyo 103-8666 (JP)**

(72) Inventors:
• **HARADA, Masaru**
**Osaka-shi, Osaka 530-8222 (JP)**
• **UEMURA, Erika**
**Otsu-shi, Shiga 520-2141 (JP)**
• **NINOMIYA, Yuki**
**Otsu-shi, Shiga 520-2141 (JP)**

(74) Representative: **Kador & Partner Part mbB**
**Corneliusstraße 15**
**80469 München (DE)**

(54) **FIRE RESISTANT SHEET AND COVERED ARTICLE**

(57)    There is provided a fire resistant sheet having excellent flame retardance and an article covered with a fire resistant sheet. The present invention provides a fire resistant sheet including: a fiber base material layer containing a non-melting fiber A having a high-temperature shrinkage rate of 3% or less and a thermal conductivity, conforming to ISO22007-3 (2008), of 0.060 W/m·K or less, and a thermoplastic fiber B having an LOI value, conforming to JIS K7201-2 (2007), of 25 or more; and a resin layer containing expandable graphite, wherein a phase transition temperature, conforming to JIS K7121 (2012), of the resin is lower by 20°C or more than an expansion starting temperature of the expandable graphite, and an article covered with the fire resistant sheet.

**EP 4 494 862 A1**

**Description**

TECHNICAL FIELD

The present invention relates to a fire resistant sheet and a covered article covered with a fire resistant sheet.

BACKGROUND ART

In the field of interior materials for aircraft, automobiles, and railways, or interior materials for buildings and furniture, flame retardance is required for a skin material and a material covering the inside of the skin material in order to ensure safety.

For example, there are FMVSS-302 and JIS D1201 for automobile interior materials, a nonmetallic material testing method for railway vehicles and a 45 degree ethyl alcohol method for railway interior materials, JIS A1321 for wall covering, and a Crib-5 flame retardant standard for some public facilities, and flame retardance of different standards in each field of application is required.

Furthermore, an aircraft sheet material is required to have flame retardance by a gasoline burner test for an entire seat obtained by combining a skin material with a seat cushion material, in addition to flame retardance of a skin material alone as in a 12-second or 60-second vertical combustion test, and further required to have higher flame retardance.

In order to achieve high flame retardance for the entire seat, it is important to suppress combustion of a seat cushion, and in order to suppress the combustion of a seat cushion, a method is typically adopted in which a thick felt formed of a heat resistant fiber is inserted between a skin material and a seat cushion or a flame retardant is kneaded into a seat cushion to make the seat cushion itself flame-retardant.

A non-melting heat resistant fiber such as meta-aramid, para-aramid, and flame resistant yarns is used for the thick felt formed of a heat resistant fiber to be inserted between the skin material and the seat cushion. It has been disclosed that the unit weight of a felt can be reduced by combining a non-melting fiber having a low thermal shrinkage rate under a high temperature and a thermoplastic fiber having a high LOI value (Patent Document 1).

A method for producing a cushion foam by mixing therein a commonly-used flame retardant such as a carbonization accelerator such as a salen-type copper complex, phosphoric acid esters, a halogen-containing organic compound, and an inorganic compound has been disclosed for the flame retardation of the seat cushion itself (Patent Document 2).

Furthermore, as a method for imparting excellent flame retardance, there are disclosed a method in which thermally expandable graphite is kneaded into a thermoplastic resin to form a molded body (Patent Document 3), and a fire resistant sheet including a foam layer that thermally expands when heat is applied and a protective layer that protects the foam layer (Patent Document 4), which are mainly used in the field of building materials.

PRIOR ART DOCUMENT

PATENT DOCUMENTS

Patent Document 1: International Publication No. 2019-188276
Patent Document 2: Japanese Patent Laid-open Publication No. 2018-172597
Patent Document 3: Japanese Patent Laid-open Publication No. 2019-213629
Patent Document 4: Japanese Patent Laid-open Publication No. 2018-162628

SUMMARY OF THE INVENTION

PROBLEMS TO BE SOLVED BY THE INVENTION

Although the felt described in Patent Document 1 in which the non-melting fiber having a low thermal shrinkage rate under a high temperature and the thermoplastic fiber having a high LOI value are combined can be reduced in mass as compared with an aramid-based felt, there is still room for further weight reduction in terms of weight reduction and space saving particularly in the field of aircraft in recent years, and there is also room for further improvement in terms of wear durability against repeated attachment and detachment and use.

In the method of adding a specific flame retardant to the cushion foam described in Patent Document 2, while flame retardance is imparted, the foamability of the cushion foam is deteriorated, and it becomes difficult to adjust the rigidity of the cushion foam. Thus, there is a concern that sitting comfort is deteriorated when the cushion foam is used for a seat foam.

Since it is difficult for the resin molded body and the fire resistant sheet described in Patent Documents 3 and 4 to cover along a curved surface, the resin molded body and the fire resistant sheet are not suitable for a fire resistant material covering the surface of a seat foam. In particular, in aircraft seats, when a seat is produced by covering a foam with a sheet material having no air permeability, there is a possibility that an impact at the time of landing in an emergency cannot be sufficiently absorbed.

Therefore, an object of the present invention is to provide a fire resistant sheet having excellent durability, having high flame retardance, and capable of providing a covered article having excellent texture and good surface quality, and a covered article.

SOLUTIONS TO THE PROBLEMS

In order to solve the above-described object, the present invention adopts the following means.

(1) A fire resistant sheet including: a fiber base material layer containing a non-melting fiber A having a high-temperature shrinkage rate of 3% or less and a thermal conductivity, conforming to ISO22007-3 (2008), of 0.060 W/m·K or less, and a thermoplastic fiber B having an LOI value, conforming to JIS K7201-2 (2007), of 25 or more; and a resin layer containing expandable graphite, wherein a phase transition temperature, conforming to JIS K7121 (2012), of the resin is lower by 20°C or more than an expansion starting temperature of the expandable graphite.

(2) The fire resistant sheet according to (1), wherein the expandable graphite contains 50% by mass or more of particles passing through a sieve with a nominal aperture of 150 $\mu$m specified in JIS Z8801-1 (2019) and not passing through a sieve with a nominal aperture of 75 $\mu$m, with respect to a total mass of the expandable graphite.

(3) The fire resistant sheet according to (1) or (2), wherein an air permeability at 125 Pa, conforming to JIS L1096 (2010) A method, is 5 to 400 cc/(cm$^2$·s).

(4) The fire resistant sheet according to any one of (1) to (3), including a reinforcing layer between the fiber base material layer and the resin layer.

(5) The fire resistant sheet according to any one of (1) to (4), wherein a content rate of the non-melting fiber A is 15% by mass or more and 85% by mass or less in a layer including the fiber base material layer and the reinforcing layer.

(6) The fire resistant sheet according to any one of (1) to (5), wherein the layer including the fiber base material layer and the reinforcing layer contains 15 to 85% by mass of the thermoplastic fiber B.

(7) The fire resistant sheet according to any one of (1) to (6), wherein the non-melting fiber A is a fiber selected from the group consisting of a flame resistant fiber, a para-aramid-based fiber, a meta-aramid-based fiber, and any mixture of these fibers.

(8) The fire resistant sheet according to any one of (1) to (7), wherein the thermoplastic fiber B is a fiber formed of a resin selected from the group consisting of anisotropic molten polyester, flame retardant poly(alkylene terephthalate), flame retardant poly(acrylonitrile butadiene styrene), flame retardant polysulfone, poly(ether-ether-ketone), poly(ether-ketone-ketone), polyether sulfone, polyarylate, polyarylene sulfide, polyphenylsulfone, polyetherimide, polyamide-imide, and any mixture of these resins.

(9) A covered article covered with the fire resistant sheet according to any one of (1) to (8).

EFFECTS OF THE INVENTION

The fire resistant sheet of the present invention and the covered article covered with the fire resistant sheet have the above configuration, thereby having soft texture, excellent durability, and high flame retardance. In addition, since the fire resistant sheet easily follows the shape of the covered article, the fire resistant sheet has an excellent process passing property in a covering process, and as a result, the covered article has excellent quality. In addition, the fire resistant sheet of the present invention can provide the covered article having soft texture in that the covered article having excellent flame retardance can be obtained by covering a normal cushion foam without using a cushion foam whose rigidity is difficult to adjust.

BRIEF DESCRIPTION OF THE DRAWING

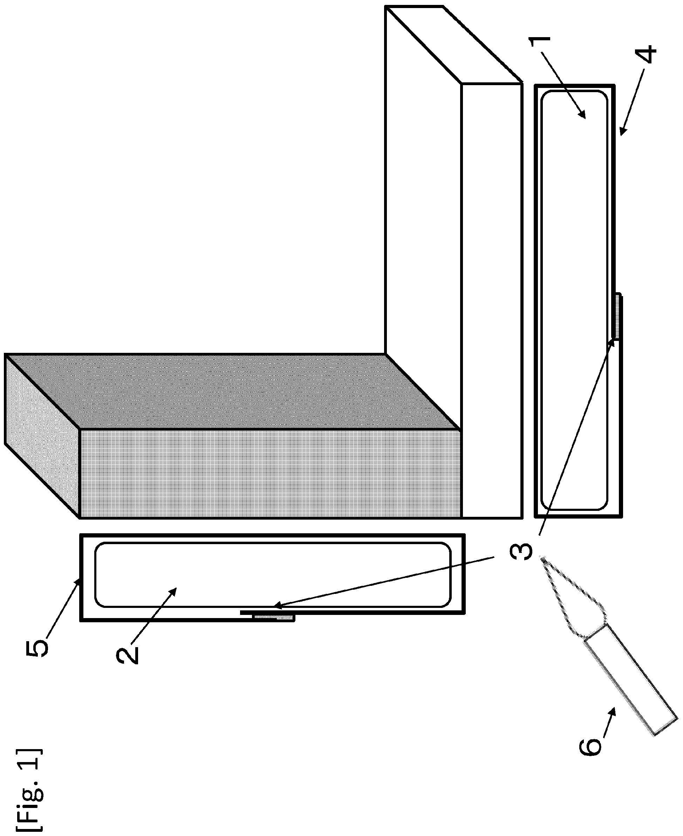

Fig. 1 is an illustration for describing a method of assembling a covered article for evaluating flame retardance of the covered article used for a combustion test of an aircraft seat cushion and the combustion test.

EMBODIMENTS OF THE INVENTION

The present invention provides a fire resistant sheet including: a fiber base material layer containing a non-melting fiber A having a high-temperature shrinkage rate of 3% or less and a thermal conductivity, conforming to ISO22007-3 (2008), of 0.060 W/m·K or less, and a thermoplastic fiber B having an LOI value, conforming to JIS K7201-2 (2007), of 25 or more; and a resin layer containing expandable graphite, wherein a phase transition temperature, conforming to JIS K7121 (2012), of the resin is lower by 20°C or more than an expansion starting temperature of the expandable graphite.

<<High-temperature shrinkage rate>>

In the present invention, a high-temperature shrinkage rate is a numerical value obtained by allowing a fiber to be a raw material of a fire resistant sheet to stand in a standard state (20°C, relative humidity: 65%) for 12 hours, applying a tension of 0.1 cN/dtex to the fiber to measure an original length L0, exposing the fiber to a dry heat atmosphere at 290°C for 30 minutes without applying a load to the fiber, sufficiently cooling the fiber in the standard state (20°C, relative humidity: 65%), further applying a tension of 0.1 cN/dtex to the fiber to measure a length L1, and determining a value from L0 and L1 by the following formula:

$$\text{High-temperature shrinkage rate} = [(L0 - L1)/L0] \times 100 \ (\%)$$

When flame comes closer and the heat is applied, a thermoplastic fiber melts, and the molten thermoplastic fiber spreads in a thin film shape along the surface of a non-melting fiber (aggregate). When the temperature further rises, both fibers are eventually carbonized, but since the high-temperature shrinkage rate of the non-melting fiber is 3% or less, the vicinity of a flame contact portion at a high temperature is less likely to shrink, and the fire resistant sheet is less likely to be broken due to thermal stress generated between a low-temperature portion being not in contact with flame and a high-temperature portion, so that flame can be blocked for a long time. Thus, excellent flame retardance as a synthetic leather is achieved. In this respect, it is preferred that the high-temperature shrinkage rate is low, but even when the fire resistant sheet is greatly expanded by heat without being shrunk, the fire resistant sheet is broken by thermal stress. Thus, it is preferred that the high-temperature shrinkage rate is -5% or more. In particular, the high-temperature shrinkage rate is preferably 0 to 2%.

<<Thermal conductivity>>

A thermal conductivity is obtained by quantifying the ease of heat conduction, and having a low thermal conductivity means that when a material is heated from one surface, the temperature of an unheated portion rises less. Using a felt having a unit weight of 200 g/m$^2$ and a thickness of 2 mm (density: 100 kg/m$^3$) as measured by a method in accordance with JIS L1913 (2010) as a test body, it is difficult for a material having a thermal conductivity of 0.060 W/m·K or less as measured by a method in accordance with ISO 22007-3 (2008) to transfer heat, and when the material is formed into a fire resistant sheet and heated from one surface, a temperature rise on the opposite side being not heated can be suppressed. Even if a flammable material is disposed on the opposite side, the flammable material is less likely to be ignited. Therefore, when an article is covered with the synthetic leather of the present invention, the flame retardance of the covered article can be maintained. It is preferred that the thermal conductivity is low, but the lower limit of the thermal conductivity for an easily available fiber material is about 0.020 W/m·K.

<<LOI value>>

An LOI value is a volume percentage of a minimum amount of oxygen required to sustain combustion of a substance in a mixed gas of nitrogen and oxygen, and it can be said that the higher the LOI value is, the more difficult it is to burn. Therefore, a thermoplastic fiber having an LOI value, conforming to JIS K7201-2 (2007), of 25 or more is hard to burn, and even in the case of being ignited, the fire is extinguished immediately after a fire source is separated, and a carbonized layer is usually formed in a portion where the fire spreads slightly and the carbonized portion can prevent the spread of the fire. It is preferred that the LOI value is high, but the upper limit of the LOI value of a practically available substance is about 65.

<<Ignition temperature>>

An ignition temperature is a spontaneous ignition temperature measured by a method in accordance with JIS K7193 (2010).

<<Phase transition temperature>>

A phase transition indicates a glass transition temperature and a melting point in the case of a crystalline material, and a glass transition temperature in the case of an amorphous material, and the melting point is a value measured by a method in accordance with JIS K7121 (2012). The melting point is the value of a melting peak temperature when heated at 10°C/min under a nitrogen gas stream as measured by differential scanning calorimetry (DSC). In addition, the glass transition temperature is a value measured by a method in accordance with JIS K7121 (2012), and is defined as a temperature (midpoint glass transition temperature) at a point where a straight line equidistant in the vertical axis direction from an extended straight line of a baseline on each of the low temperature side and the high temperature side when heated at 10°C/min under a nitrogen gas stream intersects a curve of a stepwise change portion of the glass transition as measured by differential scanning calorimetry. The measurement is started from a temperature lower by 30°C or more than the glass transition temperature, and is performed to a temperature higher by 30°C or more than the melting point. In a case where a plurality of endothermic peaks including the glass transition temperature derived from an amorphous part and the melting point derived from a crystalline part are observed as in the crystalline material, the lower one is defined as the phase transition temperature.

The phase transition temperature is preferably measured with a raw material resin. However, in a case where it is difficult to measure the phase transition temperature with the raw material resin, the phase transition temperature may be the value of the 2nd run sampled from the fire resistant sheet. In a case where the 2nd run measurement is performed, the temperature is raised to a temperature higher by 30°C or more than the melting point in the 1st run measurement under the above-described conditions, and immediately after that, rapidly cooled at a rate of 50°C/min or more, and the measurement is performed from a temperature lower by 30°C or more than the glass transition temperature.

<<Non-melting fiber A>>

In the present invention, a non-melting fiber A refers to a fiber which, when exposed to flame, does not liquefy and maintains a fiber shape, and preferably, the fiber does not liquefy and ignite at a temperature of 800°C, and more preferably, the fiber does not liquefy and ignite at a temperature of 1000°C or more. Examples of the non-melting fiber having a high-temperature shrinkage rate within the above range defined in the present invention include flame resistant fibers, para-aramid-based fibers, meta-aramid-based fibers, and glass fibers, and among them, flame resistant fibers, para-aramid-based fibers, and meta-aramid-based fibers can be preferably adopted. The flame resistant fiber is a fiber obtained by subjecting a fiber selected from acrylonitrile-based, pitch-based, cellulose-based, phenol-based fibers and the like as a raw material to a flame resistant treatment. These may be used alone or in combination of two or more. In particular, a flame resistant fiber which has a low high-temperature shrinkage rate, undergoes carbonization by an oxygen blocking effect by a filmed layer formed when a thermoplastic fiber B described later is brought into contact with flame, and has further improved heat resistance at a high temperature is preferred. Among various flame resistant fibers, an acrylonitrile-based flame resistant fiber is more preferably used as a fiber which has a small specific gravity, is flexible, and has excellent flame retardance, and such a flame resistant fiber is obtained by heating and oxidizing an acrylic fiber as a precursor in hot air. Examples of commercially available products include "Pyromex" (registered trademark), manufactured by TEIJIN LIMITED, in addition to a flame resistant fiber "ZOLTEK" (registered trademark) OX, manufactured by Zoltek Corporation, which is used in Examples and Comparative Examples to be described later. In general, the meta-aramid-based fiber has a high high-temperature shrinkage rate and does not satisfy the high-temperature shrinkage rate defined in the present invention, but any meta-aramid-based fiber can be preferably used as long as the meta-aramid-based fiber has a high-temperature shrinkage rate within the range of the present invention by suppressing the high-temperature shrinkage rate. In addition, the non-melting fiber preferably used in the present invention is used alone or in a manner of combination with different materials, and the fiber length is preferably within the range of 30 to 120 mm, and more preferably within the range of 38 to 70 mm. When the fiber length is within the range of 38 to 70 mm, it is possible to form a non-woven fabric sheet by a typical needle punch method or water-jet interlacing method, and it is easy to combine the non-woven fabric sheet with different materials. In addition, the thickness of a single fiber of the non-melting fiber is not particularly limited, but a single fiber fineness is preferably in the range of 0.1 to 10 dtex, and more preferably 0.3 to 8 dtex from the viewpoint of a passing property in a carding process.

<<Thermoplastic fiber B>>

A thermoplastic fiber B used in the present invention has an LOI value within the above range defined in the present invention and has a melting point lower than the ignition temperature of the non-melting fiber A (in the case of having no melting point, a melting temperature), and specific examples of the thermoplastic fiber B include fibers composed of a thermoplastic resin selected from the group consisting of anisotropic molten polyester, flame retardant poly(alkylene terephthalate), flame retardant poly(acrylonitrile butadiene styrene), flame retardant polysulfone, poly(ether-ether-ketone), poly(ether-ketone-ketone), polyether sulfone, polyarylate, polyarylene sulfide, polyphenylsulfone, polyetherimide, polyamide-imide, and any mixture of these resins. These may be used alone or in combination of two or more. When the LOI value is within the range defined in the present invention, combustion in air is suppressed, and the polymer is easily carbonized. In addition, since the melting point (in the case of having no melting point, a melting temperature) is lower than the ignition temperature of the non-melting fiber A, the molten polymer forms a filmed layer on the surface of the non-melting fiber A and between the fibers and the filmed layer is carbonized to increase the effect of blocking oxygen, so that oxidative degradation of the non-melting fiber A can be suppressed, and since the carbonized layer exhibits an excellent flame blocking property, the flame retardance of the entire covered article covered with the fire resistant sheet of the present invention can be maintained. The melting point of the thermoplastic fiber B is lower than the ignition temperature of the non-melting fiber A by preferably 200°C or more, more preferably 300°C or more. Among them, a polyphenylene sulfide fiber (hereinafter, also referred to as a PPS fiber) is most preferred from the viewpoint of the height of the LOI value, the range of the melting point, and easy availability. In addition, even a polymer having an LOI value out of the range defined in the present invention can be preferably used as long as it has an LOI value falling within the range defined in the present invention after being treated with a flame retardant. It is preferred that a sulfur atom or a phosphorus atom is contained in the polymer structure or the flame retardant to develop a mechanism for producing sulfuric acid or phosphoric acid during thermal decomposition of the polymer or the flame retardant to dehydrate and carbonize the polymer base material. PPS containing a sulfur atom in the polymer is most preferred as the thermoplastic fiber B, and when the flame retardant is used, a phosphorus-based or sulfur-based flame retardant is preferred. It is preferred to use a fiber containing 15% by mass or more of a sulfur atom as the thermoplastic fiber B. Specific examples thereof include PPS or polyesters to which a sulfur-based flame retardant is added. The upper limit is preferably 50% by mass or less from the viewpoint of fiber strength.

The ratio of the sulfur atom as used herein can be determined by heating about 10 mg of a sample from room temperature to 800°C at a rate of 10°C/min under an air flow condition using a thermogravimetric analyzer to oxidatively decompose the thermoplastic fiber, and quantitatively analyzing sulfur oxide in the decomposed gas by gas chromatography.

In addition, the thermoplastic fiber B used in the present invention is used as the thermoplastic resin alone or in a manner of combination with different materials, and the fiber length is preferably within the range of 30 to 120 mm, and more preferably within the range of 38 to 70 mm. When the fiber length is within the range of 38 to 70 mm, it is possible to form a non-woven fabric by a typical needle punch method or water-jet interlacing method, and it is easy to combine the non-woven fabric with different materials. In addition, the thickness of a single fiber of the thermoplastic fiber B is not particularly limited, but a single fiber fineness is preferably in the range of 0.1 to 10 dtex, and more preferably 0.3 to 8 dtex from the viewpoint of a passing property in a carding process.

The PPS fiber preferably used in the present invention is a synthetic fiber in which a polymer constituent unit is composed of a polymer having $-(C_6H_4-S)-$ as a main structural unit. Typical examples of these PPS polymers include polyphenylene sulfide, polyphenylene sulfide sulfone, polyphenylene sulfide ketone, random copolymers and block copolymers of these, and any mixture of these. As a particularly preferred PPS polymer, polyphenylene sulfide containing a p-phenylene sulfide unit represented by $-(C_6H_4-S)-$ as the main structural unit of the polymer preferably at 90% by mole or more is desirable. From the viewpoint of mass, polyphenylene sulfide containing a p-phenylene sulfide unit at 80% by mass, still more preferably at 90% by mass or more is desirable.

The method for producing the PPS fiber used in the present invention is preferably a method in which a polymer having the above-mentioned phenylene sulfide structural unit is melted at its melting point or more and spun from a spinneret to form a fiber. The spun fiber is an undrawn PPS fiber as it is. Most of the undrawn PPS fiber has an amorphous structure and the elongation at break is high. On the other hand, since such fiber has poor dimensional stability due to heat, a drawn yarn, which is oriented by heat-drawing following spinning to improve the strength and thermal dimensional stability of the fiber, is commercially available. A plurality of PPS fibers such as "TORCON" (registered trademark) (manufactured by Toray Industries, Inc.) and "PROCON" (registered trademark) (manufactured by TOYOBO Co., Ltd.) are distributed.

In the present invention, the undrawn PPS fiber and the drawn yarn of the PPS fiber can be used in combination as long as the range of the present invention is satisfied. Of course, the drawn yarn and the undrawn yarn of the fiber satisfying the range of the present invention may be used in combination instead of the PPS fiber.

<<Fiber C other than non-melting fiber A and thermoplastic fiber B>>

A fiber C other than the non-melting fiber A and the thermoplastic fiber B may be contained in order to further add specific performance to a fiber base material layer or a reinforcing layer (in the case of having a reinforcing layer) to be described later. For example, in order to improve the wettability of the fiber base material layer, a vinylon fiber, a modified polyester fiber, a nylon fiber, or the like may be used. By changing the wettability, it is possible to improve a process passing property when a resin layer containing expandable graphite is formed on the fiber base material layer. The mixing ratio of the fiber C is not particularly limited as long as the effect of the present invention is not impaired, and the mixing ratio of the fiber C other than the non-melting fiber A and the thermoplastic fiber B with respect to a layer formed of the fiber base material layer and the reinforcing layer (in the case of having a reinforcing layer) is preferably 20% by mass or less, and more preferably 15% by mass or less. The lower limit in the case of using the fiber C may be 0% by mass because it is an optional component.

In addition, the thickness of a single fiber of the fiber C other than the thermoplastic fiber B is not particularly limited, but a single fiber fineness is preferably in the range of 0.1 to 10 dtex, and more preferably 0.3 to 8 dtex from the viewpoint of a passing property in a carding process.

<<Resin layer containing expandable graphite>>

A resin layer containing expandable graphite refers to a layer containing expandable graphite, a resin carrying the expandable graphite, and a flame retardant other than the expandable graphite as an optional component.

The expandable graphite is graphite that expands by heating, and is also referred to as expandable graphite. In the expandable graphite, a substance such as sulfuric acid is introduced between graphite layers, and when heated, such a substance is gasified and expanded. The expandable graphite neutralized so as not to react with a phosphorus compound or the like is desirably used.

The expansion factor of the expandable graphite in the present invention is preferably 2 to 400 times, and more preferably 5 to 350 times. Here, the expansion factor refers to a rate of volume change before and after heating when the expandable graphite having a certain volume is heated in a heat oven set at a predetermined temperature for 30 minutes. In the case of measurement with a fire resistant sheet in which the resin layer is formed on a fiber base material layer, the areas of expandable graphite particles are calculated at 20 places using an optical microscope image of about 30 times, and the expansion factor is determined by a rate of area change before and after heating. The expandable graphite is commercially available, for example, from Ito Graphite Co., Ltd., Fuji Graphite Works Co., Ltd., and the like.

The expansion starting temperature of the expandable graphite in the present invention is preferably 120 to 300°C, and more preferably 150 to 250°C. By setting the expansion starting temperature to be higher by 20°C or more than the phase transition temperature of the resin forming the resin layer containing the expandable graphite, the resin layer carrying the expandable graphite is softened first at the time of flame contact, and the expandable graphite is easily expanded. In addition, since it is necessary to fix the resin layer in a heating furnace such as a tenter when forming the resin layer containing the expandable graphite, the expansion starting temperature needs to be higher than the fixing temperature. In general, the resin forming the resin layer is available in the form of an aqueous emulsion, and thus, the efficiency of the fixing process can be improved by setting the expansion starting temperature to 100°C or more. At the time of flame contact, the expandable graphite expands to form a heat insulating layer, and then the thermoplastic fiber B is carbonized to form a heat insulating layer in a stepwise manner. Therefore, by setting the expansion starting temperature to the melting point or less of the thermoplastic fiber B, a fire resistant sheet having more excellent heat insulating properties can be obtained. Note that the expansion starting temperature refers to the lowest heating temperature at which expansion can be visually confirmed after heating the expandable graphite having a certain volume in a heat oven set at various temperatures for 30 minutes. In the case of confirmation with the fire resistant sheet in which the resin layer is formed on the fiber base material layer, expandable graphite particles are observed using an optical microscope image of about 30 times, and the presence or absence of expansion is determined.

For the particle size of the expandable graphite in the present invention, the expandable graphite preferably contains 50% by mass or more, with respect to the total mass of the expandable graphite, of particles passing through a sieve with a nominal aperture of 150 µm and not passing through a sieve with a nominal aperture of 75 µm in a nominal aperture of a sieve mesh in accordance with JIS Z8801-1 (2019). The particle size is determined by the percentage of the mass when a sufficient amount of expandable graphite sample is separated by a sieve mesh having each nominal aperture according to the method of "dry, hand-sieving" described in JIS Z8815 (1994) using a sieve mesh in accordance with JIS Z8801-1 (2019). A specific method when the particle diameter is 1 mm or less is as follows.

(a) Sieves are stacked on a receiver so that a sieve with a larger aperture is on the top side.
(b) A sample is charged into the top sieve and capped.
(c) The stacked sieves are supported with one hand or with the arm bent so as to be inclined by about 20 degrees, and the sieve frame is tapped with one hand at a rate of about 120 times per minute. During this time, at a rate of 4 times per minute, the sieves are placed horizontally and rotated 90 degrees, and the sieve frame is strongly tapped 1 to 2 times.
(d) In a case where fine powder adheres to the back surface of the sieve mesh, the fine powder is gently removed from the back surface of the sieve with an appropriate brush, and the fine powder is sieved down.

In a case where the sufficient amount of expandable graphite sample cannot be prepared, and the particle size of the expandable graphite is confirmed using the fire resistant sheet in which the resin layer is formed on the fiber base material layer, expandable graphite particles before expansion are observed at least at 20 places using an optical microscope image of about 30 times, and the minor axis lengths of the expandable graphite particles are read. The number of expandable graphite particles having a minor axis length in the range of 75 μm (equivalent to 200 mesh) to 150 μm (equivalent to 100 mesh) is determined by the proportion to the total number (20) of the observed expandable graphite particles.

As for the particle size of the expandable graphite, the larger the particle size, the larger the expansion factor, and the more excellent the heat insulating properties. However, when the particle size is too large, the carrying property of the expandable graphite is deteriorated, and the expandable graphite is likely to fall off from the resin layer due to friction. In order to achieve both of the heat insulating properties and the friction resistance by the expandable graphite, the expandable graphite preferably contains 50% by mass or more, with respect to the total mass of the expandable graphite, of particles passing through a sieve with a nominal aperture of 150 μm and not passing through a sieve with a nominal aperture of 75 μm in a nominal aperture of a sieve mesh in accordance with JIS Z8801-1 (2019).

The resin carrying the expandable graphite is not limited as long as it is a thermoplastic resin having a phase transition temperature lower by 20°C or more than the expansion starting temperature of the expandable graphite. A polyolefin-based resin such as a polyethylene (PE) resin, a polypropylene (PP) resin, and an ethylene vinyl acetate (EVA) resin, a polystyrene (PS) resin, an acrylonitrile butadiene styrene (ABS) resin, an acrylic resin, a polyvinyl chloride (PVC) resin, a thermoplastic elastomer (particularly, an olefin-based thermoplastic elastomer), and the like can be used. Among them, since a halogen-containing resin such as a polyvinyl chloride-based resin can suppress a combustion reaction by a radical trap, a synergistic effect with the expandable graphite can be expected. Note that a small amount of thermosetting resin such as an epoxy-based resin or a melamine-based resin may be added for the purpose of improving the coating strength of the resin layer and preventing the expandable graphite from falling off. However, since there is a concern that the expansion of the expandable graphite is hindered, the percentage of the thermosetting resin with respect to the thermoplastic resin is preferably 20% by mass or less.

Furthermore, the resin layer containing the expandable graphite may contain other components as necessary. For example, when a flame retardant such as a phosphorus compound such as red phosphorus, phosphoric acid ester, metal phosphate, or ammonium polyphosphate is added, the flame retardance can be enhanced, and the fire resistant and heat insulating effect can be improved. In particular, ammonium polyphosphate is suitably added. Hydrous inorganic substances such as aluminum hydroxide and magnesium hydroxide may be added as a flame retardant other than the above flame retardants. A dehydration reaction occurs during heating, and the heat absorbing action of generated water can improve the fire resistant and heat insulating performance.

The mass ratio of the resin and the expandable graphite is preferably in the range of 1 : 0.5 to 1 : 2. When the ratio of the resin is too large, the expandable graphite is embedded in the resin, and the heat insulating effect by expansion is deteriorated. On the other hand, when the ratio of the resin is too small, the carrying power of the expandable graphite becomes weak, and the expandable graphite easily falls off due to friction or the like.

The unit weight of the resin layer containing the expandable graphite is not particularly limited, but is preferably 10 g/m$^2$ or more, more preferably 20 g/m$^2$ or more, and still more preferably 30 g/m$^2$ or more in order to obtain sufficient fire resistance. The upper limit may be set according to the obtained weight reduction effect and fire resistant performance. The upper limit is preferably 150 g/m$^2$ or less from the viewpoint of the texture of the fire resistant sheet and the obtained weight reduction effect.


<<Fiber base material layer>>

A fiber base material layer in the present invention contains the non-melting fiber A, the thermoplastic fiber B, and the fiber C as an optional component. The fiber base material layer may be any of a woven fabric, a knitted fabric, and a non-woven fabric sheet, but a non-woven fabric sheet is preferred from the viewpoint of being flexible and easy to cover a cushion foam for aircraft seats. The unit weight of the fiber base material layer is preferably 50 g/m$^2$ or more, more preferably 100 g/m$^2$ or more, and still more preferably 150 g/m$^2$ or more, and is preferably 450 g/m$^2$ or less, more preferably 400 g/m$^2$ or less, and still more preferably 350 g/m$^2$ or less. When the unit weight of the fiber base material layer is within the above range, a lightweight cushion foam covered article for aircraft seats having excellent mechanical properties can be obtained.

The thickness of the non-woven fabric sheet of the fiber base material layer is measured by a method in accordance with JIS L1913 (2010), and is preferably 0.4 mm or more. When the thickness of the non-woven fabric sheet is the above lower limit or more, excellent mechanical properties as a fiber base material layer can be obtained, and excellent flame retardance can be obtained. Moreover, when the resin layer containing the expandable graphite is formed as described later, the resin layer does not permeate to the back side of the fiber base material layer, and the fire resistant sheet has excellent texture. The upper limit of the thickness of the fiber base material layer is not particularly limited, and is preferably set from the mass and thickness of an article obtained by covering a cushion foam or the like. The upper limit is preferably 4 mm or less from the viewpoint of a covering property for a cushion foam or the like.

The structure of the non-woven fabric sheet is not limited as long as it is within the range defined in the present invention, but the density of the non-woven fabric sheet is preferably more than 50 kg/m$^3$ and less than 200 kg/m$^3$, more preferably 55 to 180 kg/m$^3$, and still more preferably 70 to 160 kg/m$^3$. In a case where the density is too small, the resin excessively permeates the fiber base material layer when the resin layer containing the expandable graphite is formed on the fiber base material layer, and the texture of the fire resistant sheet becomes too hard. Conversely, when the density is too large, the fiber base material layer itself becomes too hard, and the texture of the fire resistant sheet becomes hard. The density is calculated by dividing the mass of a 30 cm square sample by the thickness measured by a method in accordance with JIS L1913 (2010).

As the form of the fiber used for the non-woven fabric sheet of the fiber base material layer in the present invention, the number of crimps of the fiber is preferably 7 crimps/2.54 cm or more, and more preferably 12 crimps/2.54 cm or more, for sufficiently obtaining entanglement between fibers. Note that the number of crimps of the present invention is measured in accordance with JIS L1015 (2010). The number of crimps is preferably measured in the state of raw cotton, but when it is difficult, may be measured using a sample obtained by decomposing the fiber base material layer.

It is preferred that the lengths of the short fibers of the non-melting fiber A and the thermoplastic fiber B, or the fiber C in the case of using the fiber C are the same, for obtaining a more uniform non-woven fabric sheet. The same length may not be exactly the same, and there may be a difference of about $\pm$ 5% with respect to the length of the non-melting fiber A. From the viewpoint as such, the fiber length of the non-melting fiber and the fiber length of the thermoplastic fiber B or the fiber C in the case of using the fiber C are preferably within the range of 30 to 120 mm, and more preferably within the range of 38 to 70 mm.

The method for forming the non-woven fabric sheet of the present invention is not particularly limited, and examples thereof include a needle punch method and a water-jet interlacing method.

<<Reinforcing Layer>>

For the purpose of improving the form stability, wear durability, and mechanical strength of the fire resistant sheet, a reinforcing layer may be included between the fiber base material layer and the resin layer containing the expandable graphite. In addition, in a case where the fiber base material layer is extended by a machining tension at the time of forming the resin layer containing the expandable graphite on the fiber base material layer, the reinforcing layer may be combined therewith for the purpose of improving a passing property in a machining process. Examples of the reinforcing layer include a sheet formed of a fiber, a film or the like. In the case of the sheet formed of a fiber, the fiber constituting the sheet may be a short fiber or a long fiber, or may be a sheet of a direct spinning type.

In the case of the short fiber, the fiber length is preferably within the range of 30 to 120 mm, more preferably within the range of 38 to 51 mm. When the fiber length is within the range of 38 to 51 mm, it is easy to form a spun yarn in a typical spinning process, and the obtained spun yarn is woven or knitted by a typical method to form a woven or knitted fabric and form the reinforcing layer.

In the case of the long fiber, it may be used as grey yarn as it is or may be subjected to various kinds of generally known yarn processing and then be woven or knitted to form the reinforcing layer.

In the case of the direct spinning type, a nonwoven fabric sheet can be formed by a spunbonding method or a meltblowing method to form the reinforcing layer.

As the material constituting the reinforcing layer, the reinforcing layer is preferably formed of, for example, a PPS fiber since excellent fire resistance can be obtained by containing the non-melting fiber A or the thermoplastic fiber B described above.

The reinforcing layer and the fiber base material layer may contain the other fibers C other than the non-melting fiber A and the thermoplastic fiber B as long as the intended fire resistance and reinforcing effect can be obtained. Among the other fibers C, examples of a fiber **C-**1 suitably used for the reinforcing layer include polyester, polypropylene, cotton, and wool. Among the other fibers C, examples of a fiber C-2 suitably used for the fiber base material layer include polyester, nylon, acryl, and vinylon. In order to minimize a decrease in fire resistance, the percentage of the other fibers C in a layer including the fiber base material layer and the reinforcing layer (in the case of having the reinforcing layer) is preferably 20% by mass or less.

The unit weight of the reinforcing layer is not particularly limited, and can be selected according to the intended reinforcing effect. In a case where the reinforcing layer is included, the unit weight of the reinforcing layer is preferably 10 to 300 g/m$^2$, more preferably 15 to 280 g/m$^2$, and still more preferably 20 to 250 g/m$^2$. When the unit weight of the reinforcing layer is within the above range, a lightweight cushion foam covered article for aircraft seats having excellent mechanical properties can be obtained.

The reinforcing layer and the fiber base material layer may be joined together by any of a mechanical action such as a needle punch method or a water-jet interlacing method, a method of bonding by heat such as thermal calender, and a method of bonding using an adhesive.

<<Fiber base material layer, or fiber sheet including fiber base material layer and reinforcing layer>>

The fiber base material layer alone or the fiber base material layer combined with the reinforcing layer (these may be collectively referred to as "fiber sheet") may be heat-set using a tenter or calendered. Of course, a gray fabric may be used as it is. A heat-set temperature may be a temperature at which the effect of suppressing a high-temperature shrinkage rate is obtained, and is preferably 160 to 240°C, and more preferably 190 to 230°C. Calendering adjusts the thickness, that is, the density of the fiber base material layer. In a case where the density is too small, the resin layer excessively permeates the fiber base material layer when the resin layer containing the expandable graphite is formed on the fiber base material layer, and the texture of the fire resistant sheet becomes too hard. In this case, the calendering may be performed. As long as a non-woven fabric sheet having physical properties within the range defined in the present invention is obtained, the speed, pressure, and temperature of the calender are not limited.

If the content rate of the non-melting fiber A in the layer including the fiber base material layer and the reinforcing layer as an optional component, that is, in the fiber sheet is too low, a function as an aggregate is insufficient, and thus, the mixing ratio of the non-melting fiber A is preferably 15% by mass or more, and more preferably 20% by mass or more. The upper limit is preferably 85% by mass or less, more preferably 70% by mass or less, still more preferably 60% by mass or less, and particularly preferably 50% by mass or less from the viewpoint of the productivity and strength of the fiber base material and the reinforcing layer.

If the mixing ratio of the thermoplastic fiber B in the fiber sheet is too low, the thermoplastic fibers do not sufficiently spread in a film shape between the non-melting fibers of the aggregate, and thus the content rate of the thermoplastic fiber B is preferably 10% by mass or more, more preferably 15% by mass or more, still more preferably 20% by mass or more, and particularly preferably 30% by mass or more. If the mixing ratio of the thermoplastic fiber B is too high, the carbonized portion tends to be brittle at the time of flame contact and holes tend to be formed in a fiber base material layer portion, and thus, the upper limit of the mixing ratio is preferably 85% by mass or less, and more preferably 80% by mass or less.

It is preferred that the unit weight of the fiber sheet is the unit weight of the fiber base material layer, or in a case where the reinforcing layer is included, the unit weight of the fiber sheet is usually a unit weight obtained by adding the unit weight of the reinforcing layer to the unit weight of the fiber base material layer. In the case of the fiber sheet including the reinforcing layer, and in a case where the content of the non-melting fiber A and the thermoplastic fiber B in the fiber sheet is large, a sufficient effect can still be exhibited even by reducing the unit weight of the fiber sheet to be lower than the total unit weight of the unit weight of the fiber base material layer and the unit weight of the reinforcing layer as described above. For example, when (1) the content rate of the non-melting fiber A in the fiber sheet is within the above preferred range, (2) the content rate of the thermoplastic fiber B in the fiber sheet is within the above preferred range, or (3) both of the above (1) and (2) are satisfied, it is preferred to set the unit weight of the fiber sheet to 450 g/m$^2$ or less, more preferably 400 g/m$^2$ or less, and particularly 350 g/m$^2$ or less from the viewpoint of being able to reduce the weight of the fiber sheet. The lower limit is preferably 50 g/m$^2$ or more, more preferably 100 g/m$^2$ or more, particularly 150 g/m$^2$ or more. In this case, the unit weight distribution of the fiber base material layer and the reinforcing layer in the fiber sheet can be appropriately selected depending on the intended use. For example, it is preferred to increase the unit weight of the reinforcing layer in a case where emphasis is placed on the reinforcing effect and the form stability, and to increase the unit weight of the fiber base material layer in a case where emphasis is placed on the softness and the followability to the shape of an object to be covered.

<<Method for producing fire resistant sheet>>

The fire resistant sheet of the present invention is usually produced by forming the resin layer containing the expandable graphite on the fiber base material layer, or the fiber sheet which is the fiber base material layer to which the reinforcing layer is joined. In a case where the resin layer is provided on the fiber base material layer to which the reinforcing layer is joined, it is preferred to adopt a structure having the reinforcing layer between the fiber base material layer and the resin layer by forming the resin layer on the reinforcing layer side.

The method for forming the resin layer is not particularly limited, and a resin liquid containing expandable graphite emulsified and dispersed in water or a solvent is prepared, and the fiber sheet including the fiber base material layer and the reinforcing layer as an optionally-provided layer is coated therewith or immersed therein and then dried. Examples of the coating method include gravure coating, and knife coating. As the method of immersion, the fiber sheet is dipped in a coating liquid, and then the excess coating liquid is squeezed with a mangle or the like. A viscosity modifier may be used in combination as appropriate depending on the coating amount and the coating method. In addition, coating may be performed a plurality of times in order to achieve a target coating amount. Drying after coating is performed using a commonly-used dryer such as a tenter. The drying is performed at the expansion starting temperature or less of the expandable graphite, or in a case where the drying is performed at the expansion starting temperature or more, it is preferred to appropriately adjust conditions so as to shorten the drying time.

The coating surface in the case of coating with the resin layer containing the expandable graphite is not particularly limited. In the case of having the reinforcing layer, coating the surface of the reinforcing layer can suppress excessive permeation of the resin into the fiber base material layer, and the texture of the fire resistant sheet can be maintained. In addition, the presence density of the expandable graphite is increased by unevenly distributing the resin layer containing the expandable graphite on one surface of the fire resistant sheet, and the obtained heat insulating effect is improved.

Since a part of the fiber base material layer is firmly bonded by the resin layer containing the expandable graphite, the durability against wear is improved, and when a hook-and-loop fastener such as a "Velcro (registered trademark)" tape is stuck to an article covered with the fire resistant sheet such as a cushion foam to repeatedly attach and detach the article, the fire resistant sheet can be prevented from being frayed or broken at the "Velcro (registered trademark)" tape portion.

The thickness of the obtained fire resistant sheet is preferably 0.4 to 4.0 mm, more preferably 0.5 to 3.5 mm, and still more preferably 0.6 to 3.0 mm from the viewpoint of flame retardant performance, wear durability, texture, and space saving of a covered article such as a seat. When the thickness is smaller than the above range, the wear durability is poor, and the fire resistance of the entire covered article such as a seat when integrated with an article such as a seat cushion material may become insufficient. On the other hand, when the thickness is larger than the above range, the texture is hardened.

The unit weight of the fire resistant sheet is preferably 460 g/m$^2$ or less, more preferably 60 to 400 g/m$^2$, still more preferably 80 to 350 g/m$^2$, and particularly preferably 100 to 300 g/m$^2$ from the viewpoint of flame retardant performance, wear durability, texture, and weight reduction of the covered article such as a seat. When the unit weight is the lower limit or more of the above range, the wear durability is excellent, and the flame retardance of the entire covered article such as a seat when integrated with an article such as a seat cushion material is excellent. On the other hand, when the unit weight is the upper limit or less of the above range, the merit of weight reduction of the entire covered article such as a seat is extremely large.

In addition, in the fire resistant sheet of the present invention, the mass percentage of the resin layer containing the expandable graphite in the entire mass of the fire resistant sheet is preferably 5 to 75%, more preferably 5 to 60%, still more preferably 8 to 55%, and particularly preferably 10 to 50%. Since the resin layer containing the expandable graphite of the present invention exhibits excellent heat insulating properties and flame retardant performance and contributes to weight reduction of the fire resistant sheet, the mass percentage of the resin layer containing the expandable graphite being the above lower limit or more achieves sufficiently excellent flame retardance as the fire resistant sheet alone or when provided as the covered article such as a seat. On the other hand, the mass percentage of the resin layer containing the expandable graphite being the above upper limit or less is preferred in that the relative mass of the fiber base material layer is sufficiently large, the form stability of the fire resistant sheet when exposed to high-temperature flame is sufficiently excellent, and the flame retardance when provided as the covered article such as a seat is excellent. Since the mass of the fiber base material layer can be suppressed in order to impart the form stability of the fire resistant sheet when exposed to high-temperature flame, the merit of weight reduction can be effectively exhibited.

<<Air permeability of fire resistant sheet>>

In the fire resistant sheet of the present invention, an air permeability at 125 Pa, conforming to JIS L1096 (2010) A method, is preferably 5 to 400 cc/(cm$^2$·s), more preferably 10 to 300 cc/(cm$^2$·s), still more preferably 20 to 200 cc/(cm$^2$·s), and particularly preferably 40 to 150 cc/(cm$^2$.s). When the air permeability is less than 5 cc/(cm$^2$·s), it becomes difficult to absorb impacts, and the sitting comfort at the moment of sitting deteriorates when covering a foam with a sheet material to produce a seat. On the other hand, when the air permeability is more than 400 cc/(cm$^2$·s), there is a concern that flame escapes from a gap between the heat resistant sheets and the flame retardance of the covered article decreases.

<<Application of fire resistant sheet>>

The thus-obtained fire resistant sheet of the present invention has excellent flame retardance and also has excellent physical properties such as texture and wear durability, and the flame retardant performance is effective not only for the fire resistant sheet alone but also for the entire covered article when the fire resistant sheet covers an article such as a cushion foam. Therefore, the fire resistant sheet of the present invention can be used as a surface material covering a seat cushion material or the like in addition to being directly used as decoration of a ceiling or a wall surface. Among them, the fire resistant sheet can be particularly suitably used as a surface material covering a seat cushion material mounted on automobiles, railways, and ships which are required to have high flame retardance, and a surface material for chairs and sofas in high-rise buildings and public facilities.

EXAMPLES

Next, the present invention will be described in detail on the basis of Examples. However, the present invention is not limited only to the Examples. Various modifications and corrections can be made without departing from the technical scope of the present invention. Methods of measuring various properties used in the present Examples are as follows.

[Unit weight of fiber base material layer]

The mass of a 30 cm square sample was measured and expressed in mass per 1 $m^2$ ($g/m^2$). When it is difficult to measure the fiber base material layer alone in a state where the measurement sample is a fire resistant sheet, a value calculated by peeling off and removing the resin layer and the reinforcing layer using a sample of an arbitrary area and dividing the mass of the fiber base material portion by the sample area may be used.

[Unit weight of reinforcing layer]

The mass of a 30 cm square sample was measured and expressed in mass per 1 $m^2$ ($g/m^2$). When it is difficult to measure the reinforcing layer alone in a state where the measurement sample is a fire resistant sheet, a value calculated by peeling off and removing the fiber base material layer and the resin layer using a sample of an arbitrary area and dividing the mass of the reinforcing layer portion by the sample area may be used.

[Unit weight of fire resistant sheet]

The mass of a 30 cm square sample was measured and expressed in mass per 1 $m^2$ ($g/m^2$). When the measurement sample is smaller than a 30 cm square, a value calculated by dividing the sample mass by the area of the sample may be used.

[Unit weight of resin layer containing expandable graphite]

The unit weight ($g/m^2$) is obtained by subtracting the [unit weight of fiber base material layer] and the [unit weight of reinforcing layer] from the [unit weight of fire resistant sheet] described above.

[Thickness of fiber base material layer and fire resistant sheet]

The thickness was measured in accordance with JIS L1913 (2010). When the measurement sample is in a state of a fire resistant sheet and it is difficult to perform measurement with the fiber base material layer alone, the cross section of the sample may be imaged at a magnification at which the entire fire resistant sheet in the thickness direction is about 50 to 90% of an imaging range of a scanning electron microscope (SEM) (specifically, about 30 to 200 times), and at any 5 places in the cross-sectional photograph, the thickness of the fiber base material layer portion may be read on a scale and an average value thereof may be used as the thickness of the fiber base material layer.

[Content of non-melting fiber A, thermoplastic fiber B, and fiber C in layer including fiber base material layer and reinforcing layer]

In the present Examples, the content was calculated on the basis of the amount of use of raw material fibers. In a case where the content is measured using the fire resistant sheet, the content is evaluated as follows.

(1) Identification of fiber types constituting fiber base material layer and reinforcing layer, and resin type constituting resin layer containing expanded graphite:
Fiber types constituting the fiber base material layer and the reinforcing layer and a resin type constituting the resin layer containing the expanded graphite are identified using a microscopic FT-IR (Fourier transform infrared spectrophotometer).
(2) Removal of resin layer from fire resistant sheet:
After the resin type is identified in the above (1), the resin is removed using acid, alkali, or an appropriate organic solvent depending on the resin type. The concentration of the acid, alkali, or organic solvent, and the treatment temperature and time for removal can be appropriately adjusted.
(3) Measurement of contents of various fibers:

After the fiber types are identified in the above (1), the mass of each fiber type is measured by performing sorting by appearance or separation by a dissolution method using a solvent suitable for each fiber type, and the content percentage is calculated by dividing the mass of each fiber type by the total mass of the fiber base material layer and the reinforcing layer.

[Evaluation of wear durability of fire resistant sheet]

Conforming to JIS L1096 (2010) E method (Martindale method), a standard friction cloth and the fire resistant sheet were rubbed in multiple directions on a surface coated with the resin layer containing the expandable graphite, and the number of frictions to the end point was measured. The average for three times was calculated and expressed in unit of ten times.

[Flame retardant test for automobile interior materials of fire resistant sheet]

The burn length was measured in accordance with a horizontal combustion test FMVSS No. 302 for automobile interior materials specified in JIS D1201 (1998). A burn length of 4 inches (102 mm) or less was determined as pass, and a burn length of 4 inches (102 mm) or less was indicated as B, a burn length of 3 inches (76 mm) or less as A, and fail as F.

[Flame retardant test for aircraft interior materials of fire resistant sheet]

A 12-second vertical combustion test was performed as specified in 14 CFR Part 25 Section 25.853(a) and Appendix F Part 25, Part I, and a residual flame time, a drip flame time, and a burn length were measured. A sample having a residual flame time of 15 seconds or less, a drip flame time of 5 seconds or less, and a burn length of 8 inches (203 mm) or less was determined as pass and indicated as A, and other samples were determined as fail and indicated as F.

[Flame retardant test of aircraft seat cushion]

A combustion test was performed in accordance with the gasoline burner test specified in 14 CFR Part 25 Section 25.853 (c) Appendix F Part 25, Part II. Fig. 1 is an illustration for describing a method of assembling a covered article for evaluating flame retardance of the covered article used for a combustion test of an aircraft seat cushion and the combustion test. A soft urethane foam commercially available from Fuji Gomu co., ltd. is cut into a size of 450 mm × 500 mm for a seat surface and a size of 450 mm × 630 mm for a back surface to obtain a urethane foam (seat surface) 1 and a urethane foam (back surface) 2, respectively. A "Velcro (registered trademark)" tape 3 made of polyphenylene sulfide is attached to the fire resistant sheet of the present invention by sewing with a meta-aramid yarn to prepare a skin material (seat surface) 4 and a skin material (back surface) 5. The skin material (seat surface) 4 and the skin material (back surface) 5 cover the urethane foam (seat surface) 1 and the urethane foam (back surface) 2, respectively, which are fixed to an L-shaped frame (not shown) to assemble a covered article 7. Note that the sample mass is measured before the test. Heating is performed for 2 minutes by a burner 6 from the side surface of the set sample, and the temperature of the burner is set such that the lowest temperature and the highest temperature measured at 5 places in the width direction in the root portion of the burner port are in the range of 1000 ± 20°C. After heating, the burner is separated from the sample and the sample is allowed to stand for 5 minutes. The sample mass is measured after being allowed to stand for 5 minutes. A case where after the sample was allowed to stand for 5 minutes, flame ignited on the sample was completely extinguished, the burn lengths of the front and rear sides of the back surface cushion and the bottom and upper portions of the seat surface cushion were all 17 inches (432 mm) or less, and the mass loss percentage of the sample after the test was 10.0% or less was determined as pass, and among them, the mass loss percentage of 6.0% or less was indicated as A, and the mass loss percentage of more than 6.0% and 10.0% or less was indicated as B. A case where after the sample was allowed to stand for 5 minutes, flame ignited on the sample was not extinguished, the burn length was more than 17 inches (432 mm), or the mass loss percentage of the sample was more than 10.0% even when the flame was extinguished was determined as fail and indicated as F.

["Velcro (registered trademark)" tape durability test of fire resistant sheet]

In Fig. 1, when the attachment and detachment of the "Velcro (registered trademark)" tape portion were repeated 50 times, the fire resistant sheet not frayed around the "Velcro (registered trademark)" tape portion was indicated as A, the fire resistant sheet frayed around the "Velcro (registered trademark)" tape portion was indicated as B, and the fire resistant sheet torn around the "Velcro (registered trademark)" tape portion was indicated as F.

[Evaluation of durability of expandable graphite carried by fire resistant sheet]

In accordance with JIS L1096 (2010) E method (Martindale method), a sample in which all the expandable graphite on the fire resistant sheet fell off after 20 times of friction of a standard friction cloth and the fire resistant sheet in multiple directions on a surface coated with the resin layer containing the expandable graphite was indicated as C, a sample in which the expandable graphite on the fire resistant sheet remained after 20 times of friction, but all the expandable graphite on the fire resistant sheet fell off after 50 times of friction was indicated as B, and a sample in which the expandable graphite remained on the fire resistant sheet after 50 times of friction was indicated as A.

[Sitting comfort of aircraft seat cushion]

Sitting comfort at the time of sitting on a seat surface portion of the covered article 7 assembled in the procedure according to the [flame retardant test of aircraft seat cushion] was scored by three experts in sensory evaluation. From the viewpoint of the elasticity and repulsion of the seat cushion at the moment of sitting, the case of only a cushion not covered with the fire resistant sheet was used as reference, and it was judged whether the elasticity and repulsion in the case of being covered with the fire resistant sheet were appropriately excellent equivalent to or more than the reference and the sitting comfort was favorable, or the seat cushion was hard and the sitting comfort was poor with the hardness and thickness of the fire resistant material hindering the elasticity and repulsion of the seat cushion. 3 points: about the same level as the cushion alone and comfortable to sit, 2 points: normal, 1 point: uncomfortable to sit, were described as the average point of the evaluation by the three people.

[Fiber or sheet constituting fiber base material layer and reinforcing layer]

<Non-melting fiber A-1>

A 2.2 dtex flame resistant fiber ("Oxidized Polyacrylicnitrile Fiber") ("ZOLTEK" (registered trademark) OX) manufactured by Zoltek Corporation (length: 50 mm, high-temperature shrinkage rate: 1.6%, thermal conductivity: 0.033 W/m·K (measured by producing 200 g/m$^2$ of a needle punch felt having a thickness of 2 mm). number of crimps: 12 (crimps/25 mm), crimp ratio: 12%) was used.

<Non-melting fiber A-2>

A 2.2 dtex meta-aramid fiber ("ARAWIN" (registered trademark)) manufactured by Toray Advanced Materials Korea Inc. (length: 51 mm, high-temperature shrinkage rate: 5.7%, thermal conductivity: 0.033 W/m·K (measured by producing 200 g/m$^2$ of a needle punch felt having a thickness of 2 mm), heat-set at 250°C to have a high-temperature shrinkage rate of 2.4%, was used. The number of crimps was 16 (crimps/25 mm), and the crimp ratio was 15%.

<Non-melting fiber A-3>

A 1.7 dtex para-aramid-based fiber ("Kevlar" (registered trademark)) manufactured by DU PONT-TORAY CO., LTD. (length: 51 mm, high-temperature shrinkage rate: 1.8%, thermal conductivity: 0.047 W/m·K (measured by producing 200 g/m$^2$ of a needle punch felt having a thickness of 2 mm) was used.

<Non-melting fiber A-4>

A 2.3 dtex phenol fiber ("Kynol" (registered trademark)) manufactured by Gun Ei Chemical Industry Co., Ltd. (length: 49 mm, high-temperature shrinkage rate: 2.4%, thermal conductivity: 0.042 W/m·K (measured by producing 200 g/m$^2$ of a needle punch felt having a thickness of 2 mm) was used.

<Thermoplastic fiber B-1>

"TORCON" (registered trademark) product number S371 manufactured by Toray Industries, Inc., which is a drawn PPS fiber having a single fiber fineness of 2.2 dtex and a cut length of 51 mm, (LOI value: 34, melting point: 284°C, glass transition temperature: 90°C, number of crimps: 14 (crimps/25 mm), crimp ratio: 18%) was used. The ratio of sulfur atoms in the fiber was 26.2% by mass.

<Thermoplastic fiber B-2>

"SIVERAS" (registered trademark) manufactured by Toray Industries, Inc., which is an anisotropic molten polyester fiber having a single fiber fineness of 5.9 dtex and a cut length of 50 mm, (LOI value: 31, melting point: 336°C, number of crimps: 4 (crimps/25 mm), crimp ratio: 12%) was used.

<Thermoplastic fiber B-3>

A drawn polyethylene terephthalate (PET) fiber having a single fiber fineness of 2.2 dtex and a cut length of 51 mm (LOI value: 20, melting point: 263°C, glass transition temperature: 68°C, number of crimps: 16 (crimps/25 mm), crimp ratio: 19%), provided with a phosphorus-based flame retardant by Dip processing, was used. The LOI value of the fiber after the flame retardation was 26.

<Reinforcing layer 1>

(Spinning)

The drawn yarns of PPS fibers were mixed together using an opener, then were further mixed together using a blower, and then passed through a carding machine to be formed into a sliver. The mass of the obtained sliver was 30.23 g/5.46 m. Then, the total draft was set to 8 times and drawn by a drawing frame to obtain a sliver of 28.03 g/5.46 m. Then, the sliver was twisted to 0.55 T/2.54 cm to be drawn 7.4 times by a rover spinning machine to obtain a roving yarn of 323.20 g/5.46 m. Then, the roving yarn was twisted to 16.4 T/2.54 cm by a fine spinning machine to be drawn 30 times as large as the total draft, and twisted to obtain a spun yarn with a cotton count of No. 20. The spun yarn of No. 20 is defined as a weft yarn of the scrim. Furthermore, the obtained spun yarn was upper twisted to 64.7 T/2.54 cm by a double twister to obtain a 20 count 2ply yarn. The 20 count 2ply yarn is used as a warp yarn of the scrim.

(Weaving)

The obtained spun yarn was woven by plain weaving with 113 warp yarns /10 cm and 98 weft yarns /10 cm by a rapier loom to obtain a scrim of 109 g/m$^2$.

<Reinforcing layer 2>

A PET100% spunbonded nonwoven fabric "AXTAR" (registered trademark) product number M1025-5T manufactured by Toray Industries, Inc., having a unit weight of 25 g/m$^2$ and a thickness of 0.07 mm, was used.

[Resin layer containing expandable graphite]

<Expandable graphite D-1>

Expandable graphite EXP-50S160 manufactured by Fuji Graphite Works Co., Ltd. was used. The expansion starting temperature measured with the expandable graphite particles alone was 160°C, and the expansion factor was 285 times. For the nominal particle size, the expandable graphite contains 75% or more of particles not passing through a sieve with a nominal aperture of 300 $\mu$m (equivalent to 50 mesh). The percentage of particles passing through a sieve with a nominal aperture of 150 $\mu$m and not passing through a sieve with a nominal aperture of 75 $\mu$m was 12.5% by mass.

<Expandable graphite D-2>

Expandable graphite EXP-80S manufactured by Fuji Graphite Works Co., Ltd. was used. The expansion starting temperature measured with the expandable graphite particles alone was 200°C, and the expansion factor was 180 times. For the nominal particle size, the expandable graphite contains 75% or more of particles not passing through a sieve with a nominal aperture of 180 $\mu$m (equivalent to 80 mesh). The percentage of particles passing through a sieve with a nominal aperture of 150 $\mu$m and not passing through a sieve with a nominal aperture of 75 $\mu$m was 4.5% by mass.

<Expandable graphite D-3>

Expandable graphite EXP-50S300 manufactured by Fuji Graphite Works Co., Ltd. was used. The expansion starting temperature measured with the expandable graphite particles alone was 300°C, and the expansion factor was 164 times. For the nominal particle size, the expandable graphite contains 75% or more of particles not passing through a sieve with a nominal aperture of 300 $\mu$m (equivalent to 50 mesh). The percentage of particles passing through a sieve with a nominal aperture of 150 $\mu$m and not passing through a sieve with a nominal aperture of 75 $\mu$m was 3.5% by mass.

<Expandable graphite D-4>

Expandable graphite EXP-200S manufactured by Fuji Graphite Works Co., Ltd. was used. The expansion starting temperature measured with the expandable graphite particles alone was 200°C, and the expansion factor was 35 times. For the nominal particle size, the expandable graphite contains 60% or more of particles passing through a sieve with a nominal aperture of 75 $\mu$m (equivalent to 200 mesh). The percentage of particles passing through a sieve with a nominal aperture of 150 $\mu$m and not passing through a sieve with a nominal aperture of 75 $\mu$m was 27.8% by mass.

<Expandable graphite D-5>

Expandable graphite 9510045 manufactured by Ito Graphite Co., Ltd. was used. The expansion starting temperature measured with the expandable graphite particles alone was 200°C, and the expansion factor was 45 times. For the nominal particle size, the percentage of particles passing through a sieve with a nominal aperture of 150 $\mu$m and not passing through a sieve with a nominal aperture of 75 $\mu$m was 92.1% by mass.

<Acrylic resin E-1>

An acrylic resin "VONCOAT" (registered trademark) S-5 manufactured by DIC Corporation, having a phase transition temperature (Tg) catalogue value of -10°C.

<Styrene-based resin E-2>

An acrylic resin "VONCOAT" (registered trademark) SK-105-E manufactured by DIC Corporation, having a phase transition temperature (Tg) catalogue value of 100°C.

<Vinyl chloride-based resin E-3>

A vinyl chloride-based resin "VINYBLAN" (registered trademark) 985 manufactured by Nissin Chemical Industry Co., Ltd., having a phase transition temperature (Tg) catalogue value of 80°C.

<Melamine resin E-4>

A melamine resin "AMIDIR" (registered trademark) M-3 and a melamine resin crosslinker Catalyst ACX manufactured by DIC Corporation, having no phase transition because of being a thermosetting resin.

[Example 1]

(Production of fiber base material layer)

A drawn PPS fiber and a flame resistant fiber were mixed by an opener so that the mass mixing ratio of the drawn PPS fiber and the flame resistant fiber is 60 : 40 and then further mixed by a blower, and then a web was made by a carding machine. The obtained web was laminated with a cloth lapping machine, and then formed into a felt with a needle punching machine to obtain a fiber base material layer having a unit weight of 150 g/m$^2$ and a thickness of 1.42 mm.

(Resin layer containing expandable graphite)

A dispersion liquid containing the expandable graphite D-1: 9.5 parts by mass, the acrylic resin E-1: 7.0 parts by mass, a phosphoric acid ester-based flame retardant ("ADK STAB" (registered trademark) FP-600 manufactured by ADEKA Corporation): 3.5 parts by mass, and water: 80 parts by mass was prepared. To the obtained dispersion liquid, xanthan gum was added to adjust the viscosity to 2000 mPa·s, and the resulting dispersion liquid was used for coating by knife coating. Thereafter, drying was performed in a tenter at 110°C. The coating amount of a resin layer containing the expandable graphite was 45 g/m$^2$, and the thickness of a fire resistant sheet was 1.51 mm. The phase transition temperature (Tg) of the resin layer collected from the fire resistant sheet was - 7°C.

(Evaluation of various physical properties)

The mechanical properties and wear durability are as shown in Table 1, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was as excellent as 3.9%. The sensory evaluation of the sitting comfort of the seat cushion was 3.0 points.

[Example 2]

(Production of fiber base material layer)

The same fiber base material layer as that prepared in Example 1 was used as a fiber base material layer.

(Resin layer containing expandable graphite)

A resin liquid was prepared, used for coating by knife coating, and dried at the same ratio as in Example 1 except that the resin was changed from the acrylic resin E-1 to the styrene resin E-2. The coating amount was 43 g/m$^2$, and the obtained fire resistant sheet had a unit weight of 193 g/m$^2$ and a thickness of 1.53 mm. The phase transition temperature (Tg) of the resin layer collected from the fire resistant sheet was 96°C.

(Evaluation of various physical properties)

The mechanical properties and wear durability are as shown in Table 1, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was as excellent as 4.2%. The sensory evaluation of the sitting comfort of the seat cushion was 3.0 points.

[Example 3]

(Production of fiber base material layer)

The same fiber base material layer as that prepared in Example 1 was used as a fiber base material layer.

(Resin layer containing expandable graphite)

A resin liquid was prepared, used for coating by knife coating, and dried at the same ratio as in Example 1 except that the resin was changed from the acrylic resin E-1 to the vinyl chloride-based resin E-3. The coating amount was 46 g/m$^2$, and the obtained fire resistant sheet had a unit weight of 196 g/m$^2$ and a thickness of 1.51 mm. The phase transition temperature (Tg) of the resin layer collected from the fire resistant sheet was 82°C.

(Evaluation of various physical properties)

The mechanical properties and wear durability are as shown in Table 1, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was as excellent as 3.6%. The sensory evaluation of the sitting comfort of the seat cushion was 3.0 points.

[Example 4]

(Production of fiber base material layer and reinforcing layer)

A drawn PPS fiber and a flame resistant fiber were mixed by an opener so that the mass mixing ratio of the drawn PPS fiber and the flame resistant fiber is 20 : 80 and then further mixed by a blower, and then a web was made by a carding machine. The obtained web was laminated with a cloth lapping machine, and then formed into a felt with a needle punching machine to obtain a felt having a unit weight of 62 g/m$^2$. The obtained felt and the reinforcing layer 1 were further joined by the needle punching machine to obtain a fiber sheet having a unit weight of 171 g/m$^2$ and a thickness of 1.78 mm.

(Production of fire resistant sheet)

Coating with the resin layer was performed in the same procedure as in Example 1. The coating amount was 39 g/m$^2$, and the obtained fire resistant sheet had a unit weight of 210 g/m$^2$ and a thickness of 1.89 mm. The phase transition temperature (Tg) of the resin layer collected from the fire resistant sheet was -5°C.

(Evaluation of various physical properties)

The mechanical properties and wear durability are as shown in Table 1, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was as excellent as 3.9%. The sensory evaluation of the sitting comfort of the seat cushion was 2.7 points.

[Example 5]

(Production of fiber base material layer and reinforcing layer)

A drawn PPS fiber and a flame resistant fiber were mixed by an opener so that the mass mixing ratio of the drawn PPS fiber and the flame resistant fiber is 60 : 40 and then further mixed by a blower, and then a web was made by a carding machine. The obtained web was laminated with a cloth lapping machine, and then formed into a felt with a needle punching machine to obtain a felt having a unit weight of 150 g/m$^2$. The obtained felt and the reinforcing layer 2 were further joined by the needle punching machine to obtain a fiber sheet having a unit weight of 175 g/m$^2$ and a thickness of 1.42 mm.

(Production of fire resistant sheet)

Coating with the resin layer was performed in the same procedure as in Example 1. The coating amount was 43 g/m$^2$, and the obtained fire resistant sheet had a unit weight of 218 g/m$^2$ and a thickness of 1.44 mm. The phase transition temperature (Tg) of the resin layer collected from the fire resistant sheet was -6°C.

(Evaluation of various physical properties)

The mechanical properties and wear durability are as shown in Table 2, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was 7.8%, which was within the pass range. The sensory evaluation of the sitting comfort of the seat cushion was 2.7 points.

[Example 6]

(Production of fiber base material layer)

A drawn PPS fiber and a flame resistant fiber were mixed by an opener so that the mass mixing ratio of the drawn PPS fiber and the flame resistant fiber is 10 : 90 and then further mixed by a blower, and then a web was made by a carding machine. The obtained web was laminated with a cloth lapping machine, and then formed into a felt with a needle punching machine to obtain a fiber base material layer having a unit weight of 156 g/m$^2$ and a thickness of 1.65 mm.

(Production of fire resistant sheet)

Coating with the resin layer was performed in the same procedure as in Example 1. The coating amount was 45

g/m$^2$, and the obtained fire resistant sheet had a unit weight of 201 g/m$^2$ and a thickness of 1.64 mm. The phase transition temperature (Tg) of the resin layer collected from the fire resistant sheet was -9°C.

(Evaluation of various physical properties)

The mechanical properties and wear durability are as shown in Table 2, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was 7.9%, which was within the pass range. The sensory evaluation of the sitting comfort of the seat cushion was 3.0 points.

[Example 7]

(Production of fiber base material layer)

A drawn PPS fiber and a flame resistant fiber were mixed by an opener so that the mass mixing ratio of the drawn PPS fiber and the flame resistant fiber is 90 : 10 and then further mixed by a blower, and then a web was made by a carding machine. The obtained web was laminated with a cloth lapping machine, and then formed into a felt with a needle punching machine to obtain a fiber base material layer having a unit weight of 154 g/m$^2$ and a thickness of 1.45 mm.

(Production of fire resistant sheet)

Coating with the resin layer was performed in the same procedure as in Example 1. The coating amount was 46 g/m$^2$, and the obtained fire resistant sheet had a unit weight of 200 g/m$^2$ and a thickness of 1.59 mm. The phase transition temperature (Tg) of the resin layer collected from the fire resistant sheet was -8°C.

(Evaluation of various physical properties)

The mechanical properties and wear durability are as shown in Table 2, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was 8.9%, which was within the pass range. The sensory evaluation of the sitting comfort of the seat cushion was 2.7 points.

[Example 8]

(Production of fiber base material layer and reinforcing layer)

A drawn PPS fiber and a meta-aramid fiber were mixed by an opener so that the mass mixing ratio of the drawn PPS fiber and the meta-aramid fiber is 60 : 40 and then further mixed by a blower, and then a web was made by a carding machine. The obtained web was laminated with a cloth lapping machine, and then formed into a felt with a needle punching machine to obtain a fiber sheet having a unit weight of 152 g/m$^2$ and a thickness of 1.45 mm.

(Production of fire resistant sheet)

Coating with the resin layer was performed in the same procedure as in Example 1. The coating amount was 45 g/m$^2$, and the obtained fire resistant sheet had a unit weight of 197 g/m$^2$ and a thickness of 1.55 mm. The phase transition temperature (Tg) of the resin layer collected from the fire resistant sheet was -7°C.

(Evaluation of various physical properties)

The mechanical properties and wear durability are as shown in Table 2, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was as excellent as 4.9%. The sensory evaluation of the sitting comfort of the seat cushion was 2.3 points.

[Example 9]

(Production of fiber base material layer and reinforcing layer)

A drawn PPS fiber and a para-aramid-based fiber were mixed by an opener so that the mass mixing ratio of the drawn PPS fiber and the para-aramid-based fiber is 60 : 40 and then further mixed by a blower, and then a web was made by a carding machine. The obtained web was laminated with a cloth lapping machine, and then formed into a felt with a needle punching machine to obtain a fiber sheet having a unit weight of 150 g/m$^2$ and a thickness of 1.46 mm.

(Production of fire resistant sheet)

Coating with the resin layer was performed in the same procedure as in Example 1. The coating amount was 43 g/m$^2$, and the obtained fire resistant sheet had a unit weight of 193 g/m$^2$ and a thickness of 1.53 mm. The phase transition temperature (Tg) of the resin layer collected from the fire resistant sheet was -8°C.

(Evaluation of various physical properties)

The mechanical properties and wear durability are as shown in Table 3, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was as excellent as 4.2%. The sensory evaluation of the sitting comfort of the seat cushion was 2.3 points.

[Example 10]

(Production of fiber base material layer and reinforcing layer)

A stretched PPS fiber and a phenol fiber were mixed by an opening machine so that the mass mixing ratio of the stretched PPS fiber and the phenol fiber is 60 : 40 and then further mixed by a blowing machine, and then a web was made by a carding machine. The obtained web was laminated with a cloth lapping machine, and then formed into a felt with a needle punching machine to obtain a fiber sheet having a unit weight of 152 g/m$^2$ and a thickness of 1.44 mm.

(Production of fire resistant sheet)

Coating with the resin layer was performed in the same procedure as in Example 1. The coating amount was 45 g/m$^2$, and the obtained fire resistant sheet had a unit weight of 197 g/m$^2$ and a thickness of 1.56 mm. The phase transition temperature (Tg) of the resin layer collected from the fire resistant sheet was -7°C.

(Evaluation of various physical properties)

The mechanical properties and wear durability are as shown in Table 3, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was 5.8%, which was within the pass range. The sensory evaluation of the sitting comfort of the seat cushion was 2.7 points.

[Example 11]

(Production of fiber base material layer and reinforcing layer)

A drawn PPS fiber, an anisotropic molten polyester, and a flame resistant fiber were mixed by an opener so that the mass mixing ratio of the drawn PPS fiber, the anisotropic molten polyester, and the flame resistant fiber is 20 : 40 : 40 and then further mixed by a blower, and then a web was made by a carding machine. The obtained web was laminated with a cloth lapping machine, and then formed into a felt with a needle punching machine to obtain a fiber sheet having a unit weight of 157 g/m$^2$ and a thickness of 1.57 mm.

(Production of fire resistant sheet)

Coating with the resin layer was performed in the same procedure as in Example 1. The coating amount was 44 g/m$^2$, and the obtained fire resistant sheet had a unit weight of 201 g/m$^2$ and a thickness of 1.65 mm. The phase transition temperature (Tg) of the resin layer collected from the fire resistant sheet was -7°C.

(Evaluation of various physical properties)

The mechanical properties and wear durability are as shown in Table 3, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was as excellent as 4.3%. The sensory evaluation of the sitting comfort of the seat cushion was 2.3 points.

[Example 12]

(Production of fiber base material layer and reinforcing layer)

A flame retardant PET fiber and a flame resistant fiber were mixed by an opener so that the mass mixing ratio of the flame retardant PET fiber and the flame resistant fiber is 60 : 40 and then further mixed by a blower, and then a web was made by a carding machine. The obtained web was laminated with a cloth lapping machine, and then formed into a felt with a needle punching machine to obtain a fiber sheet having a unit weight of 152 g/m$^2$ and a thickness of 1.44 mm.

(Production of fire resistant sheet)

Coating with the resin layer was performed in the same procedure as in Example 1. The coating amount was 43 g/m$^2$, and the obtained fire resistant sheet had a unit weight of 195 g/m$^2$ and a thickness of 1.47 mm. The phase transition temperature (Tg) of the resin layer collected from the fire resistant sheet was -8°C.

(Evaluation of various physical properties)

The mechanical properties and wear durability are as shown in Table 3, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was 9.1%, which was within the pass range. The sensory evaluation of the sitting comfort of the seat cushion was 3.0 points.

[Example 13]

(Production of fiber base material layer and reinforcing layer)

The same fiber base material layer as that prepared in Example 4 was used as a fiber base material layer.

(Production of fire resistant sheet)

A resin liquid was prepared, used for coating by knife coating, and dried at the same ratio as in Example 1 except that the expandable graphite D-1 was changed to D-4. The coating amount was 41 g/m$^2$, and the obtained fire resistant sheet had a unit weight of 212 g/m$^2$ and a thickness of 1.89 mm.

(Evaluation of various physical properties)

The mechanical properties and wear durability are as shown in Table 4, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was 8.7%, which was within the pass range. The sensory evaluation of the sitting comfort of the seat cushion was 2.7 points.

[Example 14]

(Production of fiber base material layer and reinforcing layer)

The same fiber base material layer as that prepared in Example 4 was used as a fiber base material layer.

(Production of fire resistant sheet)

A resin liquid was prepared, used for coating by knife coating, and dried at the same ratio as in Example 1 except that the expandable graphite D-1 was changed to D-5. The coating amount was 43 $g/m^2$, and the obtained fire resistant sheet had a unit weight of 214 $g/m^2$ and a thickness of 1.90 mm.

(Evaluation of various physical properties)

The mechanical properties and wear durability are as shown in Table 4, and sufficient physical properties as a fire resistant sheet were satisfied. The wear durability of the expandable graphite was as excellent as A. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was as excellent as 4.0%. The sensory evaluation of the sitting comfort of the seat cushion was 2.7 points.

[Example 15]

(Production of fiber base material layer)

The same fiber base material layer as that prepared in Example 4 was used as a fiber base material layer.

(Production of fire resistant sheet)

The same resin liquid as in Example 14 except that the knife gap was changed to increase the coating amount of the resin to 98 $g/m^2$ was used and processed. The obtained fire resistant sheet had a unit weight of 269 $g/m^2$ and a thickness of 2.08 mm. Since the coating thickness of the resin layer containing the expandable graphite was increased, the air permeability of the fire resistant sheet was as low as 1.9 cc/ ($cm^2$ ·s).

(Evaluation of various physical properties)

The mechanical properties and wear durability are as shown in Table 4, and sufficient physical properties as a fire resistant sheet were satisfied. The wear durability of the expandable graphite was as excellent as A. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was as excellent as 2.9%. The sensory evaluation of the sitting comfort of the seat cushion showed a low evaluation result of 1.3 points.

[Table 1]

| | | Example 1 | Example 2 | Example 3 | Example 4 |
|---|---|---|---|---|---|
| Fiber base material layer | Non-melting fiber A | A-1 Flame resistant fiber 40% | A-1 Flame resistant fiber 40% | A-1 Flame resistant fiber 40% | A-1 Flame resistant fiber 80% |
| | Thermoplastic fiber B | B-1 drawn PPS 60% | B-1 drawn PPS 60% | B-1 drawn PPS 60% | B-1 drawn PPS 20% |
| | Other fiber C | | | | |
| | Thickness (mm) | 1.42 | 1.42 | 1.42 | 1.78 |
| | Unit weight (g/m$^2$) | 150 | 150 | 150 | 62 |
| Reinforcing layer | Type | | | | Reinforcing layer 1 PPS scrim |
| | Unit weight (g/m$^2$) | | | | 109 |
| Layer including fiber base material layer and reinforcing layer | Content rate (% by mass) of non-melting fiber A in layer including fiber base material layer and reinforcing layer | 40 | 40 | 40 | 29 |
| | Content rate (% by mass) of thermoplastic fiber B in layer including fiber base material layer and reinforcing layer | 60 | 60 | 60 | 71 |
| Resin layer | Resin | Acrylic resin E-1 7.0 parts by weight | Styrene resin E-2 7.0 parts by weight | Vinyl chloride-based resin E-3 7.0 parts by weight | Acrylic resin E-1 7.0 parts by weight |
| | Expanded graphite | D-1 9.5 parts by weight | D-1 9.5 parts by weight | D-1 9.5 parts by weight | D-1 9.5 parts by weight |
| | Phosphorus-based flame retardant | 3.5 parts by weight | 3.5 parts by weight | 3.5 parts by weight | 3.5 parts by weight |
| | Unit weight of resin layer (g/m$^2$) | 45 | 43 | 46 | 39 |

(continued)

| | | Example 1 | Example 2 | Example 3 | Example 4 |
|---|---|---|---|---|---|
| Fire resistant sheet | Thickness (mm) | 1.51 | 1.53 | 1.51 | 1.89 |
| | Unit weight (g/m$^2$) | 195 | 193 | 196 | 210 |
| | Mass percentage (%) of resin layer in fire resistant sheet | 23 | 22 | 23 | 19 |
| | Wear durability of fire resistant sheet (times) | 2100 | 2150 | 2100 | 3350 |
| | Wear durability of expandable graphite | B | B | B | B |
| | "Velcro" tape durability | A Not frayed | A Not frayed | A Not frayed | A Not frayed |
| | Flame retardant test for automobile interior materials | A Self-extinguished in 38 mm mark line | A Self-extinguished in 38 mm mark line | A Self-extinguished in 38 mm mark line | A Self-extinguished in 38 mm mark line |
| | Flame retardant test for aircraft interior materials (warp/weft) | A Residual flame: 0 sec/0 sec Drip: 0 sec/0 sec Burn length: 60 mm/62 mm | A Residual flame: 0 sec/0 sec Drip: 0 sec/0 sec Burn length: 61 mm/60 mm | A Residual flame: 0 sec/0 sec Drip: 0 sec/0 sec Burn length: 63 mm/62 mm | A Residual flame: 0 sec/0 sec Drip: 0 sec/0 sec Burn length: 55 mm/56 mm |
| | Flame retardant test of seat cushion Burn length: (mm) (Front of back surface)/(back of back surface) / (bottom of seat surface) / (top of seat surface) Weight loss: (%) | A Burn length: 200/0/390/190 Weight loss: 3.9 | A Burn length: 280/0/400/170 Weight loss: 4.2 | A Burn length: 300/0/400/250 Weight loss: 3.6 | A Burn length: 220/0/320/210 Weight loss: 3.9 |
| | Air permeability (cc/ (cm$^2$ ·s)) | 155 | 154 | 154 | 156 |
| | Sensory evaluation of sitting comfort of seat cushion | 3.0 | 3.0 | 3.0 | 2.7 |

[Table 2]

| | | Example 5 | Example 6 | Example 7 | Example 8 |
|---|---|---|---|---|---|
| Fiber base material layer | Non-melting fiber A | A-1 Flame resistant fiber 40% | A-1 Flame resistant fiber 90% | A-1 Flame resistant fiber 10% | A-2 Meta-aramid 40% |
| | Thermoplastic fiber B | B-1 drawn PPS 60% | B-1 drawn PPS 10 % | B-1 drawn PPS 90% | B-1 drawn PPS 60% |
| | Other fiber C | | | | |
| | Thickness (mm) | 1.42 | 1.65 | 1.45 | 1.45 |
| | Unit weight (g/m$^2$) | 150 | 156 | 154 | 152 |
| Reinforcing layer | Type | Reinforcing layer 2 PET spunbonded | | | |
| | Unit weight (g/m$^2$) | 25 | | | |
| Layer including fiber base material layer and reinforcing layer | Content rate (% by mass) of non-melting fiber A in layer including fiber base material layer and reinforcing layer | 34 | 90 | 10 | 40 |
| | Content rate (% by mass) of thermoplastic fiber B in layer including fiber base material layer and reinforcing layer | 51 | 10 | 90 | 60 |
| Resin layer | Resin | Acrylic resin E-1 7.0 parts by weight | Acrylic resin E-1 7.0 parts by weight | Acrylic resin E-1 7.0 parts by weight | Acrylic Resin E-1 7.0 parts by weight |
| | Expanded graphite | D-1 9.5 parts by weight | D-1 9.5 parts by weight | D-1 9.5 parts by weight | D-1 9.5 parts by weight |
| | Phosphorus-based flame retardant | 3.5 parts by weight | 3.5 parts by weight | 3.5 parts by weight | 3.5 parts by weight |
| | Unit weight of Resin layer (g/m$^2$) | 43 | 45 | 46 | 45 |

(continued)

| | | Example 5 | Example 6 | Example 7 | Example 8 |
|---|---|---|---|---|---|
| Fire resis-tant sheet | Thickness (mm) | 1.44 | 1.64 | 1.59 | 1.55 |
| | Unit weight (g/m$^2$) | 218 | 201 | 200 | 197 |
| | Mass percentage (%) of Resin layer in fire resistant sheet | 20 | 22 | 23 | 23 |
| | Wear durability of fire resistant sheet (times) | 2670 | 2000 | 2350 | 2800 |
| | Wear durability of expandable graphite | B | B | B | B |
| | "Velcro" tape durability | A Not frayed | A Not frayed | A Not frayed | A Not frayed |
| | Flame retardant test for automobile interior materials | A Self-extinguished in 38 mm mark line | A Self-extinguished in 38 mm mark line | A Self-extinguished in 38 mm mark line | A Self-extinguished in 38 mm mark line |
| | Flame retardant test for aircraft interior materials (warp/weft) | A Residual flame: 0 sec/0 sec Drip: 0 sec/0 sec Burn length: 87 mm/85 mm | A Residual flame: 0 sec/0 sec Drip: 0 sec/0 sec Burn length: 43 mm/49 mm | A Residual flame: 0 sec/0 sec Drip: 0 sec/0 sec Burn length: 61 mm/60 mm | A Residual flame: 0 sec/0 sec Drip: 0 sec/0 sec Burn length: 55 mm/56 mm |
| | Flame retardant test of seat cushion Burn length: (mm) (Front of back surface)/(back of back surface)/(bottom of seat surface)/(top of seat surface) Weight loss: (%) | B Burn length: 330/0/390/330 Weight loss: 7.8 | B Burn length: 310/0/300/280 Weight loss: 7.9 | B Burn length: 390/0/430/360 Weight loss: 8.9 | A Burn length: 220/0/350/210 Weight loss: 4.9 |
| | Air permeability (cc/ (cm$^2$ ·s)) | 156 | 203 | 189 | 165 |
| | Sensory evaluation of sitting comfort of seat cushion | 2.7 | 3.0 | 2.7 | 2.3 |

[Table 3]

| | | Example 9 | Example 10 | Example 11 | Example 12 |
|---|---|---|---|---|---|
| Fiber base material layer | Non-melting fiber A | A-3 Para-aramid 40% | A-4 Phenol fiber 40% | A-1 Flame resistant fiber 40% | A-1 Flame resistant fiber 40% |
| | Thermoplastic fiber B | B-1 drawn PPS 60% | B-1 drawn PPS 60% | B-1 drawn PPS 20% B-2 Anisotropic molten Polyester 40% | B-3 Flame retardant PET 60% |
| | Other fiber C | | | | |
| | Thickness (mm) | 1.46 | 1.44 | 1.57 | 1.44 |
| | Unit weight (g/m$^2$) | 150 | 152 | 157 | 152 |
| Reinforcing Layer | Type | | | | |
| | Unit weight (g/m$^2$) | | | | |
| Layer including fiber base material layer and reinforcing layer | Content rate (% by mass) of non-melting fiber A in layer including fiber base material layer and reinforcing layer | 40 | 40 | 40 | 40 |
| | Content rate (% by mass) of thermoplastic fiber B in layer including fiber base material layer and reinforcing layer | 60 | 60 | 60 | 60 |
| Resin layer | Resin | Acrylic Resin E-1 7.0 parts by weight | Acrylic resin E-1 7.0 parts by weight | Acrylic resin E-1 7.0 parts by weight | Acrylic resin E-1 7.0 parts by weight |
| | Expanded graphite | D-1 9.5 parts by weight | D-1 9.5 parts by weight | D-1 9.5 parts by weight | D-1 9.5 parts by weight |
| | Phosphorus-based flame retardant | 3.5 parts by weight | 3.5 parts by weight | 3.5 parts by weight | 3.5 parts by weight |
| | Unit weight of Resin layer (g/m$^2$) | 43 | 45 | 44 | 43 |

(continued)

| | | Example 9 | Example 10 | Example 11 | Example 12 |
|---|---|---|---|---|---|
| Fire resistant sheet | Thickness (mm) | 1.53 | 1.56 | 1.65 | 1.47 |
| | Unit weight (g/m²) | 193 | 197 | 201 | 195 |
| | Mass percentage (%) of resin layer in fire resistant sheet | 22 | 23 | 22 | 22 |
| | Wear durability of fire resistant sheet (times) | 3750 | 2200 | 3050 | 2250 |
| | Wear durability of expandable | B | B | B | B |
| | "Velcro" tape durability | A Not frayed | A Not frayed | A Not frayed | A Not frayed |
| | Flame retardant test for automobile interior materials | A Self-extinguished in 38 mm mark line | A Self-extinguished in 38 mm mark line | A Self-extinguished in 38 mm mark line | A Self-extinguished in 38 mm mark line |
| | Flame retardant test for aircraft interior materials (warp/weft) | A Residual flame: 0 sec/0 sec Drip: 0 sec/0 sec Burn length: 59 mm/59 mm | A Residual flame: 0 sec/0 sec Drip: 0 sec/0 sec Burn length: 58 mm/59 mm | A Residual flame: 0 sec/0 sec Drip: 0 sec/0 sec Burn length: 52 mm/53 mm | A Residual flame: 0 sec/0 sec Drip: 0 sec/0 sec Burn length: 125 mm/138 mm |
| | Flame retardant test of seat cushion Burn length: (mm) (Front of back surface)/(back of back surface)/(bottom of seat surface)/(top of seat surface) Weight loss: (%) | A Burn length: 170/0/280/150 Weight loss: 4.2 | A Burn length: 210/0/320/250 Weight loss: 5.8 | A Burn length: 190/0/300/210 Weight loss: 4.3 | B Burn length: 300/10/380/250 Weight loss: 9.1 |
| | Air permeability (cc/(cm²·s)) | 165 | 169 | 207 | 166 |
| | Sensory evaluation of sitting comfort of seat cushion | 2.3 | 2.7 | 2.3 | 3.0 |

[Table 4]

| | | Example 13 | Example 14 | Example 15 |
|---|---|---|---|---|
| Fiber base material layer | Non-melting fiber A | A-1 Flame resistant fiber 80% | A-1 Flame resistant fiber 80% | A-1 Flame resistant fiber 80% |
| | Thermoplastic fiber B | B-1 drawn PPS 20% | B-1 drawn PPS 20% | B-1 drawn PPS 20% |
| | Other fiber C | | | |
| | Thickness (mm) | 1.78 | 1.78 | 1.78 |
| | Unit weight (g/m$^2$) | 62 | 62 | 62 |
| Reinforcing layer | Type | Reinforcing layer 1 PPS scrim | Reinforcing layer 1 PPS scrim | Reinforcing layer 1 PPS scrim |
| | Unit weight (g/m$^2$) | 109 | 109 | 109 |
| Layer including fiber base material layer and reinforcing layer | Content rate (% by mass) of non-melting fiber A in layer including fiber base material layer and reinforcing layer | 29 | 29 | 29 |
| | Content rate (% by mass) of thermoplastic fiber B in layer including fiber base material layer and reinforcing layer | 71 | 71 | 71 |
| Resin layer | Resin | Acrylic resin E-1 7.0 parts by weight | Acrylic resin E-1 7.0 parts by weight | Acrylic resin E-1 7.0 parts by weight |
| | Expanded graphite | D-4 9.5 parts by weight | D-5 9.5 parts by weight | D-5 9.5 parts by weight |
| | Phosphorus-based flame retardant | 3.5 parts by weight | 3.5 parts by weight | 3.5 parts by weight |
| | Unit weight of resin layer (g/m$^2$) | 41 | 43 | 98 |

(continued)

| | | Example 13 | Example 14 | Example 15 |
|---|---|---|---|---|
| Fire resistant sheet | Thickness (mm) | 1.89 | 1.90 | 2.08 |
| | Unit weight (g/m²) | 212 | 214 | 269 |
| | Mass percentage (%) of resin layer in fire resistant sheet | 19 | 20 | 36 |
| | Wear durability of fire resistant sheet (times) | 3300 | 3250 | 3750 |
| | Wear durability of expandable graphite | B | A | A |
| | "Velcro" tape durability | A Not frayed | A Not frayed | A Not frayed |
| | Flame retardant test for automobile interior materials | A Self-extinguished in 38 mm mark line | A Self-extinguished in 38 mm mark line | A Self-extinguished in 38 mm mark line |
| | Flame retardant test for aircraft interior materials (warp/weft) | A Residual flame: 0 sec/0 sec Drip: 0 sec/0 sec Burn length: 61 mm/59 mm | A Residual flame: 0 sec/0 sec Drip: 0 sec/0 sec Burn length: 51 mm/53 mm | A Residual flame: 0 sec/0 sec Drip: 0 sec/0 sec Burn length: 52 mm/53 mm |
| | Flame retardant test of seat cushion Burn length: (mm) (Front of back surface)/(back of back surface)/(bottom of seat surface)/(top of seat surface) Weight loss: (%) | B Burn length: 350/10/310/380 Weight loss: 8.7 | A Burn length: 210/0/355/280 Weight loss: 4.0 | A Burn length: 160/0/280/220 Weight loss: 2.9 |
| | Air permeability (cc/(cm²·s)) | 156 | 141 | 1.9 |
| | Sensory evaluation of sitting comfort of seat cushion | 2.7 | 2.7 | 1.3 |

[Comparative Example 1]

(Production of fiber base material layer)

A fiber base material layer having a unit weight of 167 g/m² and a thickness of 1.58 mm was obtained using only a drawn PPS fiber as the fiber.

(Production of fire resistant sheet)

Coating with the resin layer was performed in the same procedure as in Example 1. The coating amount was 43 g/m², and the obtained fire resistant sheet had a unit weight of 210 g/m² and a thickness of 1.61 mm. The phase transition temperature (Tg) of the resin layer collected from the fire resistant sheet was -8°C.

(Evaluation of various physical properties)

The mechanical properties and wear durability are as shown in Table 5, and sufficient physical properties as a fire resistant sheet were satisfied. The wear durability of the expandable graphite was B. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length failed and the mass loss percentage was 27.8%, which failed. The sensory evaluation of the sitting comfort of the seat cushion was 3.0 points.

[Comparative Example 2]

(Fiber base material layer)

A PET100% spunbonded nonwoven fabric "AXTAR" (registered trademark) product number G2200-1S manufactured by Toray Industries, Inc., having a unit weight of 200 g/m$^2$ and a thickness of 0.53 mm, was used.

(Production of fire resistant sheet)

Coating with the resin layer was performed in the same procedure as in Example 1. The coating amount was 45 g/m$^2$, and the obtained fire resistant sheet had a unit weight of 245 g/m$^2$ and a thickness of 0.65 mm. The phase transition temperature (Tg) of the resin layer collected from the fire resistant sheet was -6°C.

(Evaluation of various physical properties)

The mechanical properties and wear durability are as shown in Table 5, and sufficient physical properties were satisfied. The wear durability of the expandable graphite was B. In addition, in the flame retardant test for automobile interior materials, flame was self-extinguished within a 38 mm mark line. However, in the flame retardant test for aircraft interior materials, both the carbonization length and the residual flame failed. The obtained fire resistant sheet covered a urethane cushion, and the flame retardant test of a seat cushion was performed. As a result, the test body was completely burned down. The sensory evaluation of the sitting comfort of the seat cushion was 3.0 points.

[Comparative Example 3]

(Production of fiber base material layer)

The same fiber base material layer as that prepared in Example 1 was used as a fiber base material layer.

(Resin layer containing expandable graphite)

A resin liquid was prepared, used for coating by knife coating, and dried at the same ratio as in Example 1 except that the resin was changed from the acrylic resin E-1 to the melamine resin E-4. The coating amount was 45 g/m$^2$, and the obtained fire resistant sheet had a unit weight of 195 g/m$^2$ and a thickness of 1.51 mm. The phase transition temperature of the resin layer collected from the fire resistant sheet was not observed.

(Evaluation of various physical properties)

The mechanical properties and wear durability are as shown in Table 5, and sufficient physical properties as a fire resistant sheet were satisfied. The wear durability of the expandable graphite was as excellent as A. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, but the mass loss percentage was 15.6%, which failed. The sensory evaluation of the sitting comfort of the seat cushion was 2.0 points.

[Comparative Example 4]

(Production of fiber base material layer)

The same fiber base material layer as that prepared in Example 1 was used as a fiber base material layer.

(Resin layer containing expandable graphite)

A resin liquid was prepared, used for coating by knife coating, and dried at the same ratio as in Example 1 except that the resin was changed from the acrylic resin E-1 to the melamine resin E-4, and the expandable graphite was changed from D-1 to D-2. The coating amount was 44 g/m$^2$, and the obtained fire resistant sheet had a unit weight of 194 g/m$^2$ and a thickness of 1.59 mm. The phase transition temperature of the resin layer collected from the fire resistant sheet was not observed.

(Evaluation of various physical properties)

The mechanical properties and wear durability are as shown in Table 5, and sufficient physical properties as a fire resistant sheet were satisfied. The wear durability of the expandable graphite was as excellent as A. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, but the mass loss percentage was 15.9%, which failed. The sensory evaluation of the sitting comfort of the seat cushion was 2.0 points.

[Comparative Example 5]

(Production of fiber base material layer)

The same fiber base material layer as that prepared in Example 1 was used as a fiber base material layer.

(Resin layer containing expandable graphite)

A resin liquid was prepared, used for coating by knife coating, and dried at the same ratio as in Example 1 except that the resin was changed from the acrylic resin E-1 to the melamine resin E-4, and the expandable graphite was changed from D-1 to D-3. The coating amount was 45 g/m$^2$, and the obtained fire resistant sheet had a unit weight of 195 g/m$^2$ and a thickness of 1.56 mm. The phase transition temperature of the resin layer collected from the fire resistant sheet was not observed.

(Evaluation of various physical properties)

The mechanical properties and wear durability are as shown in Table 6, and sufficient physical properties as a fire resistant sheet were satisfied. The wear durability of the expandable graphite was as excellent as A. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, but the mass loss percentage was 20.8%, which failed. The sensory evaluation of the sitting comfort of the seat cushion was 2.0 points.

[Table 5]

| | | Comparative Example 1 | Comparative Example 2 | Comparative Example 3 | Comparative Example 4 |
|---|---|---|---|---|---|
| Fiber base material layer | Non-melting fiber A | | | A-1 Flame resistant fiber 40% | A-1 Flame resistant fiber 40% |
| | Thermoplastic fiber B | B-1 drawn PPS 100% | | B-1 drawn PPS 60% | B-1 drawn PPS 60% |
| | Other fiber C | | PET spunbonded 100% | | |
| | Thickness (mm) | 1.58 | 0.53 | 1.42 | 1.42 |
| | Unit weight (g/m$^2$) | 167 | 200 | 150 | 150 |
| Reinforcing Layer | Type | | | | |
| | Unit weight (g/m$^2$) | | | | |

(continued)

| | | Comparative Example 1 | Comparative Example 2 | Comparative Example 3 | Comparative Example 4 |
|---|---|---|---|---|---|
| Layer including fiber base material layer and reinforcing layer | Content rate (% by mass) of non-melting fiber A in layer including fiber base material layer and reinforcing layer | 0 | 0 | 40 | 40 |
| | Content rate (% by mass) of thermoplastic fiber B in layer including fiber base material layer and reinforcing layer | 100 | 0 | 60 | 60 |
| Resin layer | Resin | Acrylic Resin E-1 7.0 parts by weight | Acrylic resin E-1 7.0 parts by weight | Melamine resin E-4 7.0 parts by weight | Melamine resin E-4 7.0 parts by weight |
| | Expanded graphite | D-1 9.5 parts by weight | D-1 9.5 parts by weight | D-1 9.5 parts by weight | D-2 9.5 parts by weight |
| | Phosphorus-based flame retardant | 3.5 parts by weight | 3.5 parts by weight | 3.5 parts by weight | 3.5 parts by weight |
| | Unit weight of resin layer (g/m$^2$) | 43 | 45 | 45 | 44 |

(continued)

| | | Comparative Example 1 | Comparative Example 2 | Comparative Example 3 | Comparative Example 4 |
|---|---|---|---|---|---|
| Fire resistant sheet | Thickness (mm) | 1.61 | 0.65 | 1.51 | 1.59 |
| | Unit weight (g/m$^2$) | 210 | 245 | 195 | 194 |
| | Mass percentage (%) of resin layer in fire resistant sheet | 20 | 18 | 23 | 23 |
| | Wear durability of fire resistant sheet (times) | 2450 | 3500 or more | 2100 | 2050 |
| | Wear durability of expandable graphite | B | B | A | A |
| | "Velcro" tape durability | A Not frayed | A Not frayed | A Not frayed | A Not frayed |
| | Flame retardant test for automobile interior materials | A Self-extinguished in 38 mm mark line | A Self-extinguished in 38 mm mark line | A Self-extinguished in 38 mm mark line | A Self-extinguished in 38 mm mark line |
| | Flame retardant test for aircraft interior materials (warp/weft) | A Residual flame: 0 sec/0 sec Drip: 0 sec/0 sec Burn length: 95 mm/95 mm | F Residual flame: 36 sec/68 sec Drip: 0 sec/0 sec Burn length: 205 mm/175 mm | A Residual flame: 0 sec/0 sec Drip: 0 sec/0 sec Burn length: 64 mm/60 mm | A Residual flame: 0 sec/0 sec Drip: 0 sec/0 sec Burn length: 64 mm/61 mm |
| | Flame retardant test of seat cushion Burn length: (mm) (Front of back surface)/(back of back surface)/(bottom of seat surface)/(top of seat surface) Weight loss: (%) | F Burn length: 432/210/432/432 Weight loss: 27.8 | F Burn length: completely burned down Weight loss: completely burned down | F Burn length: 360/0/400/320 Weight loss: 15.6 | F Burn length: 380/0/410/300 Weight loss: 15.9 |
| | Air permeability (cc/ (cm$^2$ · s)) | 209 | 20 | 149 | 178 |
| | Sensory evaluation of sitting comfort of seat cushion | 3.0 | 3.0 | 2.0 | 2.0 |

[Table 6]

| | | | Comparative Example 5 |
|---|---|---|---|
| Fiber base material layer | Non-melting fiber A | | A-1 Flame resistant fiber 40% |
| | Thermoplastic fiber B | | B-1 drawn PPS 60% |
| | Other fiber C | | |
| | Thickness (mm) | | 1.42 |
| | Unit weight (g/m$^2$) | | 150 |
| Reinforcing layer | Type | | |
| | Unit weight (g/m$^2$) | | |
| Layer including fiber base material layer and reinforcing layer | Content rate (% by mass) of non-melting fiber A in layer including fiber base material layer and reinforcing layer | | 40 |
| | Content rate (% by mass) of thermoplastic fiber B in layer including fiber base material layer and reinforcing layer | | 60 |
| Resin layer | Resin | | Melamine Resin E-4 7.0 parts by weight |
| | Expanded graphite | | D-3 9.5 parts by weight |
| | Phosphorus-based flame retardant | | 3.5 parts by weight |
| | Unit weight of resin layer (g/m$^2$) | | 45 |
| Fire resistant sheet | Thickness (mm) | | 1.56 |
| | Unit weight (g/m$^2$) | | 195 |
| | Mass percentage (%) of resin layer in fire resistant sheet | | 23 |
| | Wear durability of fire resistant sheet (times) | | 2050 |
| | Wear durability of expandable graphite | | A |
| | "Velcro" tape durability | | A Not frayed |
| | Flame retardant test for automobile interior materials | | A Self-extinguished in 38 mm mark line |
| | Flame retardant test for aircraft interior materials (warp/weft) | | A Residual flame: 0 sec/0 sec Drip: 0 sec/0 sec Burn length: 61 mm/ 60 mm |
| | Flame retardant test of seat cushion Burn length: (mm) (Front of back surface)/(back of back surface)/(bottom of seat surface)/(top of seat surface) Weight loss: (%) | | F Burn length: 380/0/420/390 Weight loss: 20.8 |
| | Air permeability (cc/ (cm$^2$·s)) | | 160 |
| | Sensory evaluation of sitting comfort of seat cushion | | 2.0 |

[Reference Example 1]

(Production of fiber base material layer)

The same mass mixing ratio of the drawn PPS fiber and the flame resistant fiber as in Example 1 was used, and the unit weight was changed to 246 g/m$^2$. A fiber base material layer having a thickness of 2.15 mm was obtained.

(Production of fire resistant sheet)

The above fiber base material layer was used as it was without forming the resin layer containing the expandable graphite.

(Evaluation of various physical properties)

The mechanical properties and wear durability are as shown in Table 7, and sufficient physical properties as a fire resistant sheet were satisfied. In addition, the flame retardant test for automobile interior materials showed a self-extinguishing result within a 38 mm mark line, and the flame retardant test for aircraft interior materials showed a favorable result. The obtained fire resistant sheet covered a urethane cushion, and the flame retardant test of a seat cushion was performed. As a result, the burn length was within the pass range, and the mass loss percentage was 9.2%, which was within the pass range. The sensory evaluation of the sitting comfort of the seat cushion was 3.0 points. Comparison of Example 1 with Reference Example 1 shows that the fire resistant sheet of the present invention including the fiber base material layer and the resin layer containing the expandable graphite improves the fire resistance and the durability as compared with the sheet of Reference Example 1 in which the resin layer containing the expandable graphite is not used, even when the total unit weight of the fire resistant sheet is almost the same and the thickness is reduced.

[Table 7]

| | | Reference Example 1 |
|---|---|---|
| Fiber base material layer | Non-melting fiber A | A-1 Flame resistant fiber 40% |
| | Thermoplastic fiber B | B-1 drawn PPS 60% |
| | Other fiber C | |
| | Thickness (mm) | 2.15 |
| | Unit weight (g/m$^2$) | 203 |
| Reinforcing layer | Type | |
| | Unit weight (g/m$^2$) | |
| Layer including fiber base material layer and reinforcing layer | Content rate (% by mass) of non-melting fiber A in layer including fiber base material layer and reinforcing layer | 40 |
| | Content rate (% by mass) of thermoplastic fiber B in layer including fiber base material layer and reinforcing layer | 60 |
| Resin layer | Resin | |
| | Expanded graphite | |
| | Phosphorus-based flame retardant | |
| | Unit weight of resin layer (g/m$^2$) | |
| Fire resistant sheet | Thickness (mm) | 2.15 |
| | Unit weight (g/m$^2$) | 203 |
| | Mass percentage (%) of resin layer in fire resistant sheet | 0 |
| | Wear durability of fire resistant sheet (times) | 1240 |
| | Wear durability of expandable graphite | |
| | "Velcro" tape durability | B Frayed |
| | Flame retardant test for automobile interior materials | A Self-extinguished in 38 mm mark line |
| | Flame retardant test for aircraft interior materials (warp/weft) | A Residual flame: 0 sec/0 sec Drip: 0 sec/0 sec Burn length: 53 mm/55 mm |
| | Flame retardant test of seat cushion Burn length: (mm) (Front of back surface)/ (back of back surface)/(bottom of seat surface)/(top of seat surface) Weight loss: (%) | B Burn length: 320/50/310/350 Weight loss: 9.2 |
| | Air permeability (cc/ (cm$^2$ ·s)) | 121 |
| | Sensory evaluation of sitting comfort of seat cushion | 3.0 |

Examples 1 to 3 have the same mixing ratio of the fiber base material layer, but the amount of fiber base material layer is smaller by about 40 g/m$^2$, and instead, the resin layer containing the expandable graphite is formed, so that the total unit weight is about the same. However, as compared with Reference Example 1 shown in Table 7, the mass loss percentage of the urethane cushion is clearly smaller, and it can be seen that combination with the resin layer containing the expandable graphite improves the fire resistance.

According to Examples 1 to 9, the fire resistant sheet of the present invention has excellent durability and high flame retardance. By using the flame retardant, a covered article having excellent flame retardance can be obtained using a normal cushion foam without using a cushion whose rigidity is difficult to adjust, and as a result, a covered article having soft texture can be obtained.

Furthermore, as in Example 14, the wear durability of the expandable graphite can be further improved by adjusting the particle size distribution of the expandable graphite.

INDUSTRIAL APPLICABILITY

The present invention has excellent flame retardance, exhibits an excellent fire spread prevention effect when covering a combustible material, and has excellent physical properties such as texture and wear durability, and thus, can be suitably used for interior materials of automobiles, railways, ships, and the like (seats, headrests, tonneau covers, sun visors, ceilings, and the like), interior materials of high-rise buildings and public facilities, skin materials of furniture (chairs, sofas, and the like), and the like, and can be particularly suitably used for seat interiors of aircraft which require high flame retardance.

DESCRIPTION OF REFERENCE SIGNS

1:    Urethane foam (seat surface)
2:    Urethane foam (back surface)
3:    Velcro tape
4:    Skin material (seat surface)
5:    Skin material (back surface)
6:    Burner
7:    Covered article

**Claims**

1.  A fire resistant sheet comprising:

    a fiber base material layer containing a non-melting fiber A having a high-temperature shrinkage rate of 3% or less and a thermal conductivity, conforming to ISO22007-3 (2008), of 0.060 W/m·K or less, and a thermoplastic fiber B having an LOI value, conforming to JIS K7201-2 (2007), of 25 or more; and
    a resin layer containing expandable graphite,
    wherein a phase transition temperature, conforming to JIS K7121 (2012), of the resin is lower by 20°C or more than an expansion starting temperature of the expandable graphite.

2.  The fire resistant sheet according to claim 1, wherein the expandable graphite contains 50% by mass or more of particles passing through a sieve with a nominal aperture of 150 $\mu$m specified in JIS Z8801-1 (2019) and not passing through a sieve with a nominal aperture of 75 um, with respect to a total mass of the expandable graphite.

3.  The fire resistant sheet according to claim 1 or 2, wherein an air permeability at 125 Pa, conforming to JIS L1096 (2010) A method, is 5 to 400 cc/(cm$^2$·s).

4.  The fire resistant sheet according to any one of claims 1 to 3, comprising a reinforcing layer between the fiber base material layer and the resin layer.

5.  The fire resistant sheet according to any one of claims 1 to 4, wherein a content rate of the non-melting fiber A is 15% by mass or more and 85% by mass or less in a layer including the fiber base material layer and the reinforcing layer.

6.  The fire resistant sheet according to any one of claims 1 to 5, wherein the layer including the fiber base material layer and the reinforcing layer contains 15% by mass or more and 85% by mass or less of the thermoplastic fiber B.

7. The fire resistant sheet according to any one of claims 1 to 6, wherein the non-melting fiber A is a fiber selected from the group consisting of a flame resistant fiber, a para-aramid-based fiber, a meta-aramid-based fiber, and any mixture of these fibers.

8. The fire resistant sheet according to any one of claims 1 to 7, wherein the thermoplastic fiber B is a fiber formed of a resin selected from the group consisting of anisotropic molten polyester, flame retardant poly(alkylene terephthalate), flame retardant poly(acrylonitrile butadiene styrene), flame retardant polysulfone, poly(ether-ether-ketone), poly(ether-ketone-ketone), polyether sulfone, polyarylate, polyarylene sulfide, polyphenylsulfone, polyetherimide, polyamide-imide, and any mixture of these resins.

9. A covered article covered with the fire resistant sheet according to any one of claims 1 to 8.

[Fig. 1]

EP 4 494 862 A1

## INTERNATIONAL SEARCH REPORT

| International application No. |
| --- |
| **PCT/JP2023/006970** |

**A.    CLASSIFICATION OF SUBJECT MATTER**

*B32B 5/28*(2006.01)i; *B32B 27/00*(2006.01)i; *B32B 27/20*(2006.01)i; *C09K 21/10*(2006.01)i; *D04H 1/4326*(2012.01)i
FI:    B32B5/28; B32B27/00 B; B32B27/20; C09K21/10; D04H1/4326

According to International Patent Classification (IPC) or to both national classification and IPC

**B.    FIELDS SEARCHED**

Minimum documentation searched (classification system followed by classification symbols)

B32B5/28; B32B27/00; B32B27/20; C09K21/10; D04H1/4326

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | WO 2017/006807 A1 (TORAY INDUSTRIES, INC.) 12 January 2017 (2017-01-12)<br>claims, paragraph [0051] | 1-9 |
| Y | JP 2021-195461 A (SEKISUI CHEMICAL CO LTD) 27 December 2021 (2021-12-27)<br>claims, paragraphs [0060]-[0061] | 1-9 |
| Y | JP 2019-213629 A (TIGERS POLYMER) 19 December 2019 (2019-12-19)<br>claims | 1-9 |
| Y | JP 2019-96410 A (TIGERS POLYMER) 20 June 2019 (2019-06-20)<br>paragraph [0027] | 1-9 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 April 2023** | **16 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/006970**

| Patent document cited in search report | | | Publication date (day/month/year) | Patent family member(s) | | | Publication date (day/month/year) |
|---|---|---|---|---|---|---|---|
| WO | 2017/006807 | A1 | 12 January 2017 | US 2018/0187351 A1 claims, paragraph [0059] EP 3323923 A1 CA 2988384 A CN 107636219 A KR 10-2018-0022820 A MX 2017016891 A BR 112017027635 A TW 201706124 A RU 2692845 C | | | |
| JP | 2021-195461 | A | 27 December 2021 | (Family: none) | | | |
| JP | 2019-213629 | A | 19 December 2019 | (Family: none) | | | |
| JP | 2019-96410 | A | 20 June 2019 | (Family: none) | | | |

Form PCT/ISA/210 (patent family annex) (January 2015)

**REFERENCES CITED IN THE DESCRIPTION**

**Patent documents cited in the description**

- WO 2019188276 A
- JP 2018172597 A
- JP 2019213629 A
- JP 2018162628 A